# EUROPÄISCHE PATENTSCHRIFT

(11) **EP 2 634 071 B1**
(45) Veröffentlichungstag und Bekanntmachung des Hinweises auf die Patenterteilung: **14.01.2015**
(21) Anmeldenummer: 12007989.2
(22) Anmeldetag: 28.11.2012
(51) Int. Cl.: B62D 15/02

(54) **Verfahren und Vorrichtung zur Steuerung des Rangiervorgangs eines Fahrzeuggespanns**
Method and device for controlling the parking procedure of an articulated vehicle
Procédé et dispositif de commande du procédé de maneuvre d'un train de véhicule automobile

(30) Priorität: 03.03.2012 DE 102012004440
(43) Veröffentlichungstag der Anmeldung: 04.09.2013
(73) Patentinhaber: WABCO GmbH, 30453 Hannover (DE)
(72) Erfinder: Breuer, Karsten, 31867 Lauenau (DE); Dieckmann, Thomas, 30982 Pattensen (DE); Schade, Sven, 31171 Nordstemmen (DE); Stender, Axel, 31787 Hameln (DE); Stumberg, Ingo, 30625 Hannover (DE); Wiehen, Christian, 30938 Burgwedel (DE); Zielke, Frank, 30890 Barsinghausen (DE); Zimmermann, Marc, 30171 Hannover (DE)

(56) Entgegenhaltungen:
- EP-A1- 1 730 014
- WO-A1-2004/102297
- DE-A1- 19 526 702

## Beschreibung

Die Erfindung betrifft ein Verfahren zur Steuerung des Rangiervorgangs eines Fahrzeuggespanns, das ein motorisiertes Zugfahrzeug und ein Anhängerfahrzeug umfasst, die über eine Gelenkkupplung miteinander gekoppelt sind, wobei das Fahrzeuggespann eine Zugfahrzeugsensorik und eine Anhängerfahrzeugsensorik zur Erfassung seiner Istposition und Istlage aufweist, und bei dem zumindest das Anhängerfahrzeug mit einer Umfeldsensorik zur Erfassung der rückwärtigen Gespannumgebung versehen ist, wobei bei einem Rangiervorgang, bei dem das Fahrzeuggespann im wesentlichen rückwärts in eine Zielposition und Ziellage rangiert wird, die von der Umfeldsensorik erfassten Messdaten ausgewertet werden, mindestens eine Zielposition und Ziellage des Fahrzeuggespanns ermittelt wird, und eine Bahnkurve bestimmt wird, auf der das Fahrzeuggespann von der Istposition und Istlage in die Zielposition und Ziellage rangierbar ist. Außerdem betrifft die Erfindung eine Vorrichtung zur Durchführung dieses Verfahrens.

Ein Rückwärtsrangieren eines Fahrzeuggespanns erfolgt beispielsweise bei einem Heranfahren an eine Laderampe oder eine Verladeschleuse eines Logistikgebäudes zum Be- und Entladen des Anhängerfahrzeugs. Ein Rückwärtsrangieren eines Fahrzeuggespanns kann aber auch zur Aufnahme eines Wechselbehälters oder einer Wechselpritsche erforderlich sein, für die das leere Anhängerfahrgestell rückwärts unter den aufgeständerten Wechselbehälter bzw. die aufgeständerte Wechselpritsche rangiert werden muss. Außerdem kann das Rückwärtsrangieren eines Fahrzeuggespanns auch zum rückwärts Hineinfahren in eine Parklücke auf einem Autobahnparkplatz oder auf einem Speditionshof erforderlich sein.

Bei dem vorliegend betrachteten Fahrzeuggespann kann es sich um einen Anhängerzug handeln, bei dem das Zugfahrzeug als ein Lastkraftwagen mit oder ohne eigene Ladefläche bzw. eigenen Aufbau und das Anhängerfahrzeug als ein Anhänger mit starrer oder lenkbarer Deichsel ausgebildet ist. Der Anhänger ist in diesem Fall mit seiner Deichsel über eine als Anhängerkupplung ausgebildete Gelenkkupplung an das Zugfahrzeug gekoppelt. Im Fall der lenkbaren Deichsel ist diese entweder starr mit der ebenfalls lenkbaren starren Vorderachse des Anhängers verbunden oder sie steht über ein Gestänge mit den einzeln lenkbaren Vorderrädern des Anhängers in Verbindung. Ebenso kann es sich bei dem vorliegend betrachteten Fahrzeuggespann auch um einen Sattelzug handeln, bei dem das Zugfahrzeug als eine Sattelzugmaschine und das Anhängerfahrzeug als ein Sattelauflieger ausgebildet ist. In diesem Fall ist der Sattelauflieger über eine als Sattelkupplung ausgebildete Gelenkkupplung an das Zugfahrzeug gekoppelt.

Während eine Vorwärtsfahrt mit einem Fahrzeuggespann selbst von einem ungeübten Fahrer problemlos zu bewältigen ist, stellt eine Rückwärtsfahrt mit einem Fahrzeuggespann aufgrund der großen Außenabmessungen und der über die Außenspiegel nur eingeschränkt vorhandenen Sicht nach hinten selbst für einen erfahrenen Fahrer eine schwierige Aufgabe dar. Dies gilt insbesondere für einen Anhängerzug, bei dem der Anhänger mit einer lenkbaren Deichsel versehen ist, und das Zugfahrzeug somit über zwei Gelenke mit dem Rahmen des Anhängers verbunden ist, wodurch das Einhalten einer vorgegebenen Bahnkurve beim Rückwärtsrangieren besonders schwierig ist.

Zur Vermeidung von Unfällen und Beschädigungen ist daher bei solchen Rangiervorgängen mindestens ein Einweiser und/oder technische Hilfsmittel wie beispielsweise ein auf Ultraschallsendern und Ultraschallsensoren basierendes Parkabstandsanzeigesystem erforderlich. Um einen derartigen Rangiervorgang eines Fahrzeuggespanns noch sicherer und für den Fahrer einfacher beherrschbar zu machen, sind bereits mehrere Verfahren und Vorrichtungen entwickelt oder zumindest vorgeschlagen worden.

So wird beispielsweise in der DE 195 26 702 C2 ein Verfahren und eine Vorrichtung zum Rückwärtsrangieren eines Fahrzeuggespanns vorgeschlagen, bei denen eine Umfeldsensorik eine am Heck des Anhängerfahrzeugs montierte CCD-Kamera und eine Fahrzeugsensorik jeweils einen Drehwinkelsensor an den lenkbaren Rädern und an der Anhängerkupplung des Zugfahrzeugs sowie an dem Drehschemel des Anhängerfahrzeugs umfassen. Durch die Auswertung der Bilder der in Richtung der Längsachse des Anhängerfahrzeugs montierten CCD-Kamera werden die Entfernung und die Winkellage des Anhängerfahrzeugs zu der vorliegend durch den Frontbereich eines aufgeständerten Wechselbehälters bestimmten Zielposition und Ziellage ermittelt. Durch die Drehwinkelsensoren wird der Lenkausschlag der lenkbaren Räder des Zugfahrzeugs, der Knickwinkel zwischen dem Zugfahrzeug und der Deichsel des Anhängerfahrzeugs an der Anhängerkupplung, sowie der Lenkwinkel der Deichsel am Drehschemel des Zugfahrzeugs erfasst, aus denen die Position und Lage des Zugfahrzeugs relativ zum Anhängerfahrzeug bestimmt werden können. Durch die Auswertung der Daten der Umfeldsensorik sowie der Fahrzeugsensorik in einem elektronischen Steuergerät wird eine Bahnkurve und der entlang der Bahnkurve jeweils erforderliche Lenkausschlag der lenkbaren Räder des Zugfahrzeugs ermittelt, um das Fahrzeuggespann rückwärts in die Zielposition und Ziellage des Anhängerfahrzeugs zu rangieren. Hierbei ist vorgesehen, dass das Lenkgetriebe des Zugfahrzeugs mittels eines ansteuerbaren Servoantriebs betätigbar ist, so dass nach dem Einlegen eines Rückwärtsgangs die Lenkung während des Rangiervorgangs automatisiert betätigt wird, und der Fahrer mit dem Erreichen der Zielposition und Ziellage nur noch die Betriebbremse betätigen muss.

Ein aus der EP 1 625 455 B1 bekanntes Steuerungssystem eines Fahrzeuggespanns umfasst eine Lage- und Positionsbestimmungseinheit zur Ermittlung der aktuellen Position und Lage des Fahrzeuggespanns, eine Zieleingabeeinrichtung zur Eingabe der Zielposition und Ziellage des Fahrzeuggespanns durch den Fahrer, und einen Bahnrechner zur Ermittlung einer Bahnkurve zwischen der aktuellen Position und Lage sowie der Zielposition und Ziellage des Fahrzeuggespanns. Die Lage- und Positionsbestimmungseinheit kann jeweils einen elektronisch auslesbaren Kompass pro Gespannfahrzeug sowie einen Knickwinkelsensor an der Anhängerkupplung des Zugfahrzeugs zur Erfassung des Knickwinkels zwischen dem Zugfahrzeug und der Deichsel des Anhängerfahrzeugs oder einen Lenkwinkelsensor an dem Drehschemel des Anhängerfahrzeugs zur Ermittlung des Lenkwinkels der Deichsel aufweisen. Aus den Daten der Lage- und Positionsbestimmungseinheit und der Zieleingabeeinrichtung ermittelt der Bahnrechner eine aus Bahnvektoren zusammengesetzte Bahnkurve, die bei einem mit einem elektronisch ansteuerbaren Antriebsstrang versehenen Zugfahrzeug zum Anfahren der Zielposition und Ziellage des Fahrzeuggespanns automatisiert abgefahren werden kann.

In der EP 1 730 014 B1 ist ein Steuerungssystem eines Fahrzeuggespanns beschrieben, das zum zumindest teilautomatisierten Rückwärtsrangieren zur Aufnahme eines aufgeständerten Wechselbehälters oder einer aufgeständerten Wechselpritsche durch das Anhängerfahrzeug vorgesehen ist. Das bekannte Steuerungssystem umfasst eine erste Eingabeeinrichtung zur Erfassung der Istposition und Istlage des betreffenden Gestells, eine zweite Eingabeeinrichtung zur Erfassung der Istposition und Istlage des Anhängerfahrzeugs, und einen Bahnrechner zur Ermittlung einer Bahnkurve zwischen der aktuellen Position und Lage sowie der Zielposition und Ziellage des Anhängerfahrzeugs zur Aufnahme des Wechselbehälters beziehungsweise der Wechselpritsche. Die erste Eingabeeinrichtung kann aus einem an dem Gestell angeordneten Datenspeicher oder aus einem zum Beispiel in einem Gebäude eines Speditionshofes oder eines Logistikzentrums angeordneten Zentralspeicher bestehen, in dem die Istposition und Istlage des Gestells abgespeichert ist, und aus dem diese Daten drahtgebunden oder drahtlos an den Bahnrechner des Fahrzeuggespanns übertragbar sind. Die zweite Eingabeeinrichtung kann einen Knickwinkelsensor an der Anhängerkupplung des Zugfahrzeugs zur Erfassung des Knickwinkels zwischen dem Zugfahrzeug und der Deichsel des Anhängerfahrzeugs und/oder einen Lenkwinkelsensor an dem Drehschemel des Anhängerfahrzeugs zur Ermittlung des Lenkwinkels der Deichsel aufweisen. Aus den Daten der ersten Eingabeeinrichtung und der zweiten Eingabeeinrichtung ermittelt der Bahnrechner eine aus Bahnvektoren zusammengesetzte Bahnkurve, die bei einem mit einem ansteuerbaren Servoantrieb versehenen Lenkgetriebe des Zugfahrzeugs mit automatisiert betätigter Lenkung abgefahren werden kann.

Allen bislang bekannten Verfahren und Vorrichtungen zur Steuerung des Rangiervorgangs eines Fahrzeuggespanns ist gemeinsam, dass zumindest das Steuergerät zur Ermittlung der Bahnkurve, die zum Erreichen der Zielposition und Ziellage abgefahren werden muss, jeweils in dem Zugfahrzeug angeordnet ist. Demzufolge müssen alle Informationen, also die Daten über die Art, die Abmessungen und die Fahrwerksgeometrie des Zugfahrzeugs sowie des Anhängerfahrzeugs einschließlich der Deichselgeometrie, die Daten über die absolute und relative Position sowie Lage des Zugfahrzeugs und des Anhängerfahrzeugs beziehungsweise die Signale der Fahrzeugsensorik, sowie die Zielposition und Ziellage des Fahrzeuggespanns beziehungsweise die Signale der Umfeldsensorik dem Steuergerät bekannt oder an dieses übertragen werden. Dies ist zwar technisch machbar, jedoch relativ umständlich und unflexibel, wenn die Fahrzeuggespanne, wie in einer Spedition durchaus üblich, häufig wechselnd aus unterschiedlichen Zug- und Anhängerfahrzeugen zusammengestellt werden.

Der nächstliegenden Stand der Technik ist in der EP 1730014 B1 zu sehen.

Der vorliegenden Erfindung liegt daher die Aufgabe zugrunde, ein Verfahren und eine Vorrichtung zur Steuerung des Rangiervorgangs eines Fahrzeuggespanns der eingangs genannten Art vorzuschlagen, mit denen das Rückwärtsrangieren eines Fahrzeuggespanns in eine Zielposition und Ziellage auf einfache Weise unabhängig von der jeweiligen Zusammenstellung des Fahrzeuggespanns steuerbar ist.

Die Lösung dieser Aufgabe ist bezüglich ihres verfahrenstechnischen Teils ist im Anspruch 1 definiert. Die Erfindung betrifft demnach ein Verfahren zur Steuerung des Rangiervorgangs eines Fahrzeuggespanns, das ein motorisiertes Zugfahrzeug und ein Anhängerfahrzeug umfasst, die über eine Gelenkkupplung miteinander gekoppelt sind. Dieses Fahrzeuggespann weist eine Zugfahrzeugsensorik und eine Anhängerfahrzeugsensorik zur Erfassung seiner Istposition und Istlage mittels mit geeigneter Sensoren auf. Außerdem weist zumindest das Anhängerfahrzeug eine Umfeldsensorik mit geeigneten Sensoren zur Erfassung der rückwärtigen Gespannumgebung auf. Bei einem Rangiervorgang, bei dem das Fahrzeuggespann im wesentlichen rückwärts in eine Zielposition und Ziellage rangiert wird, werden die von der Umfeldsensorik erfassten Messdaten ausgewertet, mindestens eine Zielposition und Ziellage des Fahrzeuggespanns ermittelt und eine Bahnkurve bestimmt, auf der das Fahrzeuggespann von der Istposition und Istlage in die Zielposition und Ziellage rangierbar ist.

Das Verfahren sieht weiter vor, dass in einem an dem Anhängerfahrzeug angeordneten ersten elektronischen Steuergerät die Messdaten der Umfeldsensorik und die Messdaten der an dem Anhängerfahrzeug vorhandene Anhängerfahrzeugsensorik unter Berücksichtigung der Abmessungen, der Fahrwerksgeometrie und der Deichselgeometrie des Anhängerfahrzeugs ausgewertet sowie eine auf die Drehachse der Gelenkkupplung bezogene Soll-Bahnkurve bestimmt wird, die zum Erreichen der Zielposition und Ziellage des Anhängerfahrzeugs abgefahren werden soll, dass dann die Daten der Soll-Bahnkurve von dem ersten elektronischen Steuergerät des Anhängerfahrzeugs an ein an dem Zugfahrzeug angeordneten zweiten elektronischen Steuergerät übermittelt werden, dass dann in dem zweiten elektronischen Steuergerät die Messdaten der Zugfahrzeugsensorik unter Berücksichtigung der Abmessungen und der Fahrwerksgeometrie des Zugfahrzeugs ausgewertet sowie derjenige streckenbezogene Verlauf des Soll-Lenkausschlags der lenkbaren Räder des Zugfahrzeugs bestimmt wird, der während des Rangiervorgangs zum Abfahren der übermittelten Soll-Bahnkurve erforderlich ist, und dass dann das Fahrzeuggespann bei seiner Rückwärtsfahrt entlang der vorgegebenen Soll-Bahnkurve gesteuert wird.

Vorteilhafte Ausgestaltungen und Weiterbildungen dieses Verfahrens sind Gegenstand der zugeordneten Unteransprüche.

Das Verfahren gemäß der Erfindung geht demnach aus von einem an sich bekannten Fahrzeuggespann, das ein motorisiertes Zugfahrzeug und ein Anhängerfahrzeug umfasst, die über eine Gelenkkupplung miteinander gekoppelt sind. Das Fahrzeuggespann weist zudem eine Fahrzeugsensorik zur Erfassung der Istposition und Istlage des Fahrzeuggespanns auf, und zumindest das Anhängerfahrzeug weist eine Umfeldsensorik zur Erfassung insbesondere der rückwärtigen Gespannumgebung auf. Die Fahrzeugsensorik kann Lenkwinkelsensoren an den lenkbaren Fahrzeugrädern des Zugfahrzeugs und des Anhängerfahrzeugs, Drehwinkelsensoren an einer Anhängerkupplung und/oder an einem Fahrzeugdrehschemel und/oder ein Navigationsgerät aufweisen. Die Fahrzeugsensorik kann eine Kamera und/oder Ultraschallsensoren aufweisen.

Bei dem Fahrzeuggespann kann es sich um einen Anhängerzug handeln, bei dem das Zugfahrzeug als ein Lastkraftwagen mit oder ohne eigene Ladefläche beziehungsweise eigenen Aufbau und das Anhängerfahrzeug als ein Anhänger mit starrer oder schwenkbarer Deichsel ausgebildet ist. Bei dem Fahrzeuggespann kann es sich jedoch auch um einen Sattelzug handeln, bei dem das Zugfahrzeug als eine Sattelzugmaschine und das Anhängerfahrzeug als ein Sattelauflieger ausgebildet ist. Im Fall des Anhängerzugs wird die Gelenkkupplung, über die das Zugfahrzeug und das Anhängerfahrzeug miteinander gekoppelt sind, durch die Anhängerkupplung gebildet, die aus einem an dem Zugfahrzeug befestigten Kupplungsmaul mit Bolzen und einem an der Deichsel des Anhängers befindlichen Kupplungsauge besteht. Im Fall des Sattelzugs wird die Gelenkkupplung durch die Sattelkupplung gebildet, die aus einer auf dem Rahmen der Sattelzugmaschine befestigten Kupplungsplatte mit Schließmechanismus und einer unter dem Sattelauflieger montierten Lagerplatte mit einem Königszapfen besteht.

Unter der Position und Lage der beiden Gespannteile, also des Zugfahrzeugs und des Anhängerfahrzeugs, wird die jeweilige Position eines Bezugspunktes des betreffenden Fahrzeugs in einem Koordinatensystem oder relativ zu der Zielposition des Anhängerfahrzeugs und mit der Lage der Gespannteile die jeweilige Ausrichtung einer Bezugsachse des betreffenden Fahrzeugs, zum Beispiel der Längsachse des Zugfahrzeugs oder des Anhängerfahrzeugs, bezüglich der geographischen Nord-Richtung oder bezüglich der Lage der Bezugsachse des Anhängerfahrzeugs in der Zielposition verstanden.

Bei einem Rangiervorgang, bei dem das Fahrzeuggespann im wesentlichen rückwärts in die Zielposition und Ziellage rangiert wird, ist in bekannter Weise vorgesehen, dass die von der Umfeldsensorik erfassten Daten ausgewertet werden, mindestens eine Zielposition und Ziellage des Fahrzeuggespanns ermittelt wird, und eine Bahnkurve bestimmt wird, auf der das Fahrzeuggespann von der Istposition und Istlage in die Zielposition und Ziellage rangierbar ist. Die Umfeldsensorik kann beispielsweise eine am Heck des Zugfahrzeugs oder am Heck des Anhängerfahrzeugs angeordnete CCD-Kamera und/oder am Heck des Zugfahrzeugs oder am Heck des Anhängerfahrzeugs angeordnete Ultraschallsender sowie Ultraschallsensoren eines Parkabstandsanzeigesystems umfassen.

Während bei den bekannten Verfahren und Vorrichtungen zur Steuerung des Rangiervorgangs eines Fahrzeuggespanns nur ein einziges, in dem Zugfahrzeug angeordnetes Steuergerät vorgesehen ist, in dem die Daten der Umfeldsensorik und der Fahrzeugsensorik ausgewertet werden, um die Zielposition und Ziellage des Fahrzeuggespanns sowie die Bahnkurve zum Rangieren des Fahrzeuggespanns dorthin zu bestimmen, werden bei dem erfindungsgemäßen Verfahren das Zugfahrzeug und das Anhängerfahrzeug im Prinzip als weitgehend autonome Fahrzeuge behandelt.

So ist gemäß der Erfindung vorgesehen, dass zunächst in einem ersten elektronischen Steuergerät des Anhängerfahrzeugs die Messdaten der Umfeldsensorik und die Messdaten der an dem Anhängerfahrzeug angeordneten Fahrzeugsensorik unter Berücksichtigung der Abmessungen sowie der Fahrwerksgeometrie des Anhängerfahrzeugs einschließlich der Deichselgeometrie ausgewertet und eine auf die Drehachse der Gelenkkupplung bezogene Soll-Bahnkurve bestimmt wird, die zum Erreichen der Zielposition und Ziellage des Anhängerfahrzeugs abgefahren werden soll. Danach werden die Daten dieser Soll-Bahnkurve an ein zweites elektronisches Steuergerät am Zugfahrzeug übermittelt, in dem die Messdaten der im Zugfahrzeug vorhandenen Fahrzeugsensorik unter Berücksichtigung der Abmessungen und der Fahrwerksgeometrie des Zugfahrzeugs ausgewertet sowie der Verlauf des Soll-Lenkausschlags der lenkbaren Räder des Zugfahrzeugs bestimmt wird, der während des Rangiervorgangs zum Abfahren der vorgegebenen Soll-Bahnkurve erforderlich ist.

Demnach wird zunächst in dem Steuergerät des Anhängerfahrzeugs eine Soll-Bahnkurve ermittelt, auf der die Drehachse der Gelenkkupplung des Anhängerfahrzeugs, also bei einem Anhänger das Kupplungsauge der Deichsel und bei einem Sattelauflieger der Königszapfen, bewegt werden muss, um das Anhängerfahrzeug in die Zielposition und Ziellage zu rangieren. Da das Anhängerfahrzeug aber über keinen eigenen Antrieb verfügt, muss das Anhängerfahrzeug von dem Zugfahrzeug in die Zielposition und Ziellage rangiert werden.

Da bei angekoppeltem Anhänger beziehungsweise aufgesatteltem Sattelauflieger die Gelenkkupplung sowohl Bestandteil des Zugfahrzeugs als auch des Anhängerfahrzeugs ist und bei einer Bewegung des Fahrzeuggespanns unabhängig von der Bewegung der Gespannteile relativ zueinander eine einheitliche Bahnkurve beschreibt, ist die Drehachse der betreffenden Gelenkkupplung der geeignete Bezugspunkt, auf den sich die Soll-Bahnkurve bezieht. Wenn also das Zugfahrzeug während eines Rangiervorgangs den ermittelten Verlauf des Lenkausschlags der lenkbaren Räder einhält und somit die Gelenkkupplung entlang der vorgegebenen Soll-Bahnkurve führt, erreicht damit das Anhängerfahrzeug zwangsläufig seine Zielposition und Ziellage. Welches Zugfahrzeug diese Aufgabe erfüllt, ist an sich egal. Das Zugfahrzeug muss nur in der Lage sein, die von dem Steuergerät des Anhängerfahrzeugs vorgegebene Soll-Bahnkurve mit seinem Kupplungsgelenk, genauer gesagt mit der geometrischen Drehachse der Anhängerkupplung oder der Sattelkupplung, abzufahren.

Der wesentliche Vorteil des Verfahrens gemäß der Erfindung gegenüber bekannten Verfahren besteht darin, dass die Soll-Bahnkurve für das Anhängerfahrzeug unabhängig von dem gewählten Zugfahrzeug bestimmt wird, und dass der Verlauf des Lenkausschlags der lenkbaren Räder des Zugfahrzeugs als Funktion der Soll-Bahnkurve für das Zugfahrzeug unabhängig von dem Anhängerfahrzeug ermittelt wird. Somit kann das Fahrzeuggespann aus einem beliebigen Zugfahrzeug und einem beliebigen Anhängerfahrzeug zusammengestellt werden, sofern diese jeweils mit einer passenden Anhänger- oder Sattelkupplung versehen sind und Steuergeräte aufweisen, die miteinander kommunizieren, also Daten austauschen können. Mit dem Verfahren gemäß der Erfindung ergibt sich somit eine hohe Flexibilität bei der Zusammenstellung von Fahrzeuggespannen, die beispielsweise in einer Spedition zur bedarfsgerechten Zusammenstellung der Anhängergespanne und Aufliegergespanne sowie auf einem Speditionshof für den Einsatz einer speziellen Rangier-Zugmaschine für das Rangieren der Anhängerfahrzeuge genutzt werden kann.

Da es möglich ist, dass während des Rangiervorgangs der ermittelte Verlauf des Soll-Lenkausschlags der lenkbaren Räder des Zugfahrzeugs nicht exakt eingehalten werden kann, und somit die tatsächlich abgefahrene Bahnkurve der Gelenkkupplung von der Soll-Bahnkurve abweicht, kann vorteilhaft vorgesehen sein, dass die Ermittlung der Soll-Bahnkurve in dem Steuergerät des Anhängerfahrzeugs während des Rangiervorgangs fortlaufend wiederholt und die Daten der derart aktualisierten Soll-Bahnkurve jeweils an das Steuergerät des Zugfahrzeugs übermittelt werden, in dem die aktualisierte Soll-Bahnkurve zur bedarfsweisen Korrektur des Verlaufs des Soll-Lenkausschlags der lenkbaren Räder des Zugfahrzeugs ausgewertet wird.

Um einem Fahrer die entsprechende Einstellung der Lenkung des Zugfahrzeugs zu ermöglichen, kann vorteilhaft vorgesehen sein, dass während des Rangiervorgangs der jeweilige Soll-Lenkausschlag oder die Differenz zwischen dem Soll-Lenkausschlag und dem Ist-Lenkausschlag der lenkbaren Räder des Zugfahrzeugs in der Fahrerkabine des Zugfahrzeugs optisch angezeigt wird. Die Anzeige des Lenkausschlags oder der betreffenden Lenkausschlagdifferenz kann in einem Display oder in einem Zeigerinstrument erfolgen.

Wenn das Zugfahrzeug über ein durch einen ansteuerbaren Servoantrieb betätigbares Lenkgetriebe verfügt, kann während des Rangiervorgangs der jeweilige Soll-Lenkausschlag der lenkbaren Räder des Zugfahrzeugs auch automatisiert eingestellt werden.

Da ein Rangiervorgang nicht zwangsläufig durchgängig rückwärts erfolgen muss, sondern zwischenzeitlich auch das Geradeziehen des Fahrzeuggespanns durch eine kurze Vorwärtsfahrt erforderlich sein kann, wird es bevorzugt, wenn während des Rangiervorgangs die Fahrtrichtung zum Abfahren der Soll-Bahnkurve in der Fahrerkabine des Zugfahrzeugs optisch angezeigt wird, um den Fahrer auf das Einlegen eines geeigneten Vorwärts- oder Rückwärtsgangs in dem Fahrgetriebe hinzuweisen.

Wenn das Zugfahrzeug über ein durch einen ansteuerbaren Servoantrieb schaltbares Fahrgetriebe verfügt, kann während des Rangiervorgangs der jeweilige Rangiergang automatisiert eingelegt werden. Andernfalls muss dies manuell durch den Fahrer erfolgen.

Um den Fahrer rechtzeitig auf ein erforderliches Abbremsen des Fahrzeuggespanns hinzuweisen, ist bevorzugt vorgesehen, dass bei dem Rangiervorgang das Erreichen der Zielposition und Ziellage des Anhängerfahrzeugs in der Fahrerkabine des Zugfahrzeugs optisch und/oder akustisch angezeigt wird.

Sofern das Zugfahrzeug über eine durch einen ansteuerbaren Servoantrieb betätigbare Betriebsbremse verfügt, kann bei dem Rangiervorgang bei Erreichen der Zielposition und Ziellage des Anhängerfahrzeugs die Betriebsbremse automatisiert betätigt werden. Andernfalls muss die Betriebsbremse dann von dem Fahrer betätigt werden.

Die Daten der Soll-Bahnkurve können drahtgebunden, zum Beispiel über eine CAN-Bus-Verbindung, und/oder drahtlos, beispielsweise über eine WLAN-Verbindung, von dem Steuergerät des Anhängerfahrzeugs an das Steuergerät des Zugfahrzeugs übermittelt werden.

Sofern die Auswertung der Umfeldsensorik in dem Steuergerät des Anhängerfahrzeugs mehrere mögliche Zielpositionen und Ziellagen des Anhängerfahrzeugs ergibt, wird die Soll-Bahnkurve bevorzugt für diejenige Zielposition und Ziellage ermittelt, für welche die geringste Änderung der aktuellen Lage des Anhängerfahrzeugs und/oder die geringste Änderung des aktuellen Lenkwinkels der Deichsel des Anhängerfahrzeugs erforderlich ist. Der Fahrer bestimmt in diesem Fall die anzufahrende Zielposition und Ziellage des Anhängerfahrzeugs dadurch, dass er das Fahrzeuggespann vor dem Rangiervorgang vorwärts in eine Ausgangsposition und Ausgangslage bringt, in der das Anhängerfahrzeug und dessen Deichsel entsprechend ausgerichtet sind.

Alternativ hierzu ist es jedoch auch möglich, dass dann, wenn die Auswertung der Umfeldsensorik in dem Steuergerät des Anhängerfahrzeugs mehrere mögliche Zielpositionen und Ziellagen des Anhängerfahrzeugs ergibt, diese Zielpositionen und Ziellagen über die Verbindung mit dem Steuergerät des Zugfahrzeugs in geeigneter Form in der Fahrerkabine des Zugfahrzeugs optisch angezeigt werden, der Fahrer über eine Eingabeeinrichtung die gewünschte Zielposition und Ziellage des Anhängerfahrzeugs auswählen kann, und die ausgewählte Zielposition sowie Ziellage an das Steuergerät des Anhängerfahrzeugs übermittelt wird, in dem die zugeordnete Soll-Bahnkurve bestimmt wird.

Der vorrichtungsbezogene Teil der gestellten Aufgabe ist in Verbindung mit den Merkmalen des Oberbegriffs des unabhängigen Vorrichtungsanspruchs dadurch gelöst, dass an dem Anhängerfahrzeug ein erstes elektronisches Steuergerät vorhanden ist, in dem die Messdaten der Umfeldsensorik und die in dem Anhängerfahrzeug vorhandene Anhängerfahrzeugsensorik unter Berücksichtigung der Abmessungen und der Fahrwerksgeometrie des Anhängerfahrzeugs einschließlich der Deichselgeometrie auswertbar sowie eine auf die Drehachse der Gelenkkupplung bezogene Soll-Bahnkurve bestimmbar ist, die zum Erreichen der Zielposition und Ziellage des Anhängerfahrzeugs abgefahren werden soll, dass an dem Zugfahrzeug ein zweites elektronisches Steuergerät vorhanden ist, an das von dem ersten Steuergerät die Daten der Soll-Bahnkurve übermittelbar sind, dass in dem zweiten elektronischen Steuergerät die Messdaten der Zugfahrzeugsensorik unter Berücksichtigung der Abmessungen und der Fahrwerksgeometrie des Zugfahrzeugs auswertbar sind, dass in dem zweiten elektronischen Steuergerät derjenige streckenbezogene Verlauf des Soll-Lenkausschlags der lenkbaren Räder des Zugfahrzeugs bestimmbar ist, der während des Rangiervorgangs zum Abfahren der übermittelten Soll-Bahnkurve erforderlich ist.

Vorteilhafte Ausgestaltungen und Weiterbildungen der erfindungsgemäßen Vorrichtung sind Gegenstand der zugeordneten Unteransprüche.

Demnach wird ausgegangen von einer Vorrichtung zur Steuerung des Rangiervorgangs eines Fahrzeuggespanns, das ein motorisiertes Zugfahrzeug und ein Anhängerfahrzeug umfasst, die über eine Gelenkkupplung miteinander gekoppelt sind, wobei das Fahrzeuggespann eine Zugfahrzeugsensorik und eine Anhängerfahrzeugsensorik zur Erfassung seiner Istposition und Istlage aufweist, und bei dem zumindest das Anhängerfahrzeug mit einer Umfeldsensorik zur Erfassung der rückwärtigen Gespannumgebung versehen ist, wobei bei einem Rangiervorgang, bei dem das Fahrzeuggespann im wesentlichen rückwärts in eine Zielposition und Ziellage rangiert wird, die von der Umfeldsensorik erfassten Messdaten auswertbar sind, mindestens eine Zielposition und Ziellage des Fahrzeuggespanns ermittelbar ist, und eine Bahnkurve bestimmbar ist, auf der das Fahrzeuggespann von der Istposition und Istlage in die Zielposition und Ziellage rangierbar ist.

Außerdem weist die Vorrichtung erfindungsgemäß zwei elektronische Steuergeräte auf. Ein erstes Steuergerät ist dem Anhängerfahrzeug zugeordnet bzw. in oder an diesem befestigt. Dieses erste Steuergerät ist dazu ausgebildet, dass es unabhängig von dem Zugfahrzeug die Messdaten der Umfeldsensorik und die Messdaten der in dem Anhängerfahrzeug vorhandenen Fahrzeugsensorik empfangen sowie unter Berücksichtigung der Abmessungen und der Fahrwerksgeometrie des Anhängerfahrzeugs einschließlich der Deichselgeometrie auswerten kann. Außerdem ist dieses erste Steuergerät dazu ausgebildet, dass es eine auf die Drehachse der Gelenkkupplung bezogene Soll-Bahnkurve bestimmen kann, die zum Erreichen der Zielposition und Ziellage des Anhängerfahrzeugs abgefahren werden soll.

Das zweite Steuergerät ist dem Zugfahrzeug zugeordnet bzw. in oder an diesem befestigt. Die Daten der Soll-Bahnkurve sind mittels einer geeigneten Datenübertragungseinrichtung von dem ersten Steuergerät am Anhängerfahrzeugs an das zweite Steuergerät am Zugfahrzeug übermittelbar. In diesem zweiten Steuergerät am Zugfahrzeug können unabhängig von dem Anhängerfahrzeug und dessen Steuergerät die in dem Zugfahrzeug vorhandene Fahrzeugsensorik unter Berücksichtigung der Abmessungen und der Fahrwerksgeometrie des Zugfahrzeugs ausgewertet und derjenige Verlauf des Soll-Lenkausschlags der lenkbaren Räder des Zugfahrzeugs bestimmt werden, der während des Rangiervorgangs zum Abfahren der vorgegebenen Soll-Bahnkurve erforderlich ist.

Da einerseits das Steuergerät des Anhängerfahrzeugs so ausgebildet ist, dass es die auf die Drehachse der Gelenkkupplung bezogene Soll-Bahnkurve unabhängig von dem Zugfahrzeug und dessen Sensoren sowie Steuergerät ermitteln kann, und andererseits der Verlauf des Lenkausschlags der lenkbaren Räder des Zugfahrzeugs als Funktion der Soll-Bahnkurve in dem Steuergerät des Zugfahrzeugs unabhängig von dem Anhängerfahrzeug und dessen Sensoren sowie Steuergerät ermittelbar ist, kann das Fahrzeuggespann aus einem beliebigen Zugfahrzeug und einem beliebigen Anhängerfahrzeug zusammengestellt werden, sofern diese Fahrzeuge jeweils mit einer passenden Anhänger- oder Sattelkupplung versehen sind und Steuergeräte aufweisen, die miteinander kommunizieren, also Daten austauschen können. Die Vorrichtung gemäß der Erfindung ermöglicht somit eine hohe Flexibilität bei der Zusammenstellung von Fahrzeuggespannen.

Zur Erweiterung des Funktionsumfangs der Vorrichtung gemäß der Erfindung kann vorgesehen sein, dass das zweite elektronische Steuergerät mit einer Anzeigevorrichtung in der Fahrerkabine des Zugfahrzeugs und/oder mit Lenkaktuatoren an den lenkbaren Rädern des Zugfahrzeugs und/oder mit Bremsaktuatoren an der Fahrbremse des Zugfahrzeugs sowie des Anhängerfahrzeugs und/oder mit einem Schaltaktuator an einem schaltbaren Fahrgetriebe und/oder mit einem Kupplungsaktuator an einer schaltbaren Fahrkupplung verbunden ist.

Diejenigen Daten, welche die Abmessungen und die Fahrwerksgeometrie des Anhängerfahrzeugs einschließlich der Deichselgeometrie enthalten, sind vorzugsweise in einem dem Anhängerfahrzeug zugeordneten nichtflüchtigen Datenspeicher, wie beispielsweise einem EPROM, abgespeichert, der mit dem Steuergerät des Anhängerfahrzeugs in Verbindung steht und beispielsweise Bestandteil der genannten Anhängerfahrzeugsensorik sein kann. Dieser Datenspeicher kann schon beim Hersteller des Anhängerfahrzeugs mit den anhängerspezifischen Geometriedaten beschrieben und danach an dem Anhängerfahrzeug angebracht werden.

Ebenso ist es sinnvoll, dass diejenigen Daten, welche die Abmessungen und die Fahrwerksgeometrie des Zugfahrzeugs enthalten, in einem dem Zugfahrzeug zugeordneten nichtflüchtigen Datenspeicher, wie beispielsweise einem EPROM, abgespeichert sind, der mit dem Steuergerät des Zugfahrzeugs in Verbindung steht. Dieser Datenspeicher kann schon beim Hersteller des Zugfahrzeugs mit den fahrzeugspezifischen Geometriedaten beschrieben und danach als Bestandteil der genannten Zugfahrzeugsensorik an dem Zugfahrzeug angebracht werden.

Das Steuergerät des Anhängerfahrzeugs und das Steuergerät des Zugfahrzeugs können über einen Datenbus, beispielsweise einen zumeist ohnehin vorhandenen CAN-Bus, miteinander in Verbindung stehen, der zum An- und Abkuppeln des Anhängerfahrzeugs eine nahe der Gelenkkupplung angeordnete lösbare Steckerverbindung aufweist.

Zusätzlich oder alternativ dazu ist es auch möglich, dass dem Steuergerät des Anhängerfahrzeugs und dem Steuergerät des Zugfahrzeugs jeweils eine Funk-Sende- und Funk-Empfangseinheit zugeordnet ist, über welche die beiden Steuergeräte drahtlos miteinander in Verbindung bringbar sind. Bei der verwendeten Funkverbindung kann es sich beispielsweise um eine preisgünstige WLAN-Verbindung handeln.

Zur weiteren Verdeutlichung der Erfindung ist der Beschreibung eine Zeichnung mit Ausführungsbeispielen beigefügt. In dieser zeigt
Fig. 1a ein erstes Fahrzeuggespann mit einer Vorrichtung zur Anwendung des erfindungsgemäßen Verfahrens in einer schematischen Draufsicht,
Fig. 1b den Bewegungsablauf des Anhängerfahrzeugs des ersten Fahrzeuggespanns gemäß Fig. 1a zwischen einer Istposition und Istlage sowie einer Zielposition und Ziellage in einer schematischen Draufsicht,
Fig. 2a ein zweites Fahrzeuggespann mit einer Vorrichtung zur Anwendung des erfindungsgemäßen Verfahrens in einer schematischen Draufsicht,
Fig. 2b den Bewegungsablauf des Anhängerfahrzeugs des zweiten Fahrzeuggespanns gemäß Fig. 2a zwischen einer Istposition und Istlage sowie einer Zielposition und Ziellage in einer schematischen Draufsicht,
Fig. 3a ein drittes Fahrzeuggespann mit einer Vorrichtung zur Anwendung des erfindungsgemäßen Verfahrens in einer schematischen Draufsicht, und
Fig. 3b den Bewegungsablauf des Anhängerfahrzeugs des dritten Fahrzeuggespanns gemäß Fig. 3a zwischen einer Istposition und Istlage sowie einer Zielposition und Ziellage in einer schematischen Draufsicht.

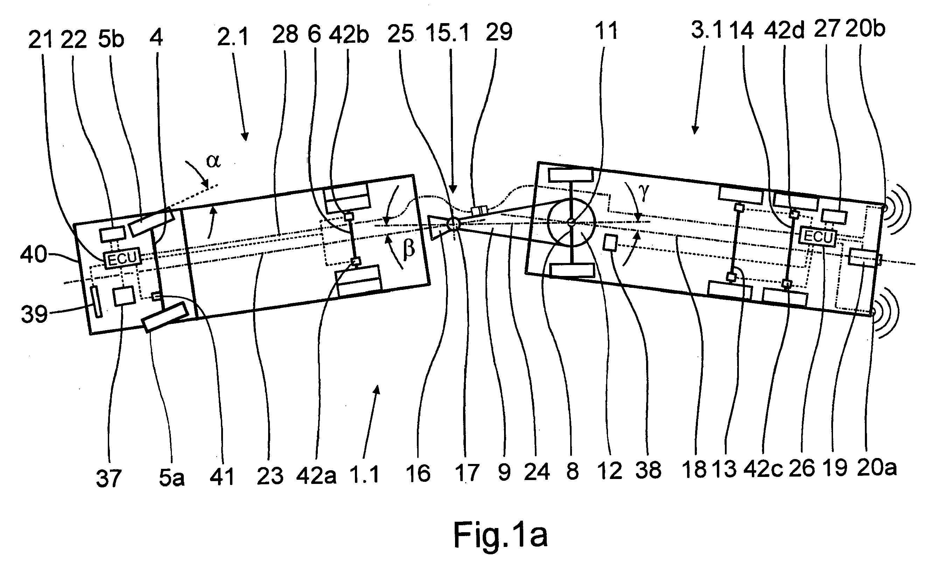

In Fig. 1a ist in einer schematischen Draufsicht ein erstes Fahrzeuggespann 1.1 abgebildet, das als ein Anhängerzug ausgebildet ist. Das Fahrzeuggespann 1.1 umfasst ein als ein zweiachsiger Lastkraftwagen mit eigener Ladefläche ausgebildetes Zugfahrzeug 2.1 und ein als dreiachsiger Anhänger ausgebildetes Anhängerfahrzeug 3.1. Die Vorderachse 4 des Zugfahrzeugs 2.1 weist zwei lenkbare Räder 5a, 5b auf. Die Hinterachse 6 bildet die Antriebsachse des Zugfahrzeugs 2.1 und ist doppelt bereift. Die Vorderachse 8 des Anhängers 3.1 ist zusammen mit einer lenkbaren Deichsel 9 um die Drehachse 11 eines Drehschemels 12 drehbar. Die beiden Hinterachsen 13, 14 des Anhängers 3.1 sind in einer so genannten Tandemanordnung in geringem Abstand hintereinander angeordnet. Das Zugfahrzeug 2.1 und der Anhänger 3.1 sind über eine Gelenkkupplung 15.1 miteinander gekoppelt, die aus einer am Heck des Lastkraftwagens 2.1 befestigten Anhängerkupplung 16 und einem an der Deichsel 9 des Anhängers 3.1 angeordneten Kupplungsauge 17 gebildet ist.

Am Heck des Anhängers 3.1 ist zur Erfassung insbesondere der rückwärtigen Gespannumgebung eine Umfeldsensorik angeordnet, die vorliegend beispielhaft eine mittig in der Längsmittelachse 18 des Anhängers 3.1 angeordnete CCD-Kamera 19 und zwei jeweils außen angeordnete Ultraschallsensoren 20a, 20b umfasst.

In dem Anhängerfahrzeug 3.1 ist ein erstes elektronisches Steuergerät 26 angeordnet, das über Daten- und Signalleitungen mit einem nichtflüchtigen Datenspeicher 27, mit den Sensoren 19, 20 der Umfeldsensorik, und mit Sensoren einer Fahrzeugsensorik 38 in Verbindung steht. In dem Datenspeicher 27 sind die Abmessungen und die Fahrwerksgeometrie des Anhängers 3.1 einschließlich der Deichselgeometrie abgespeichert. Die Fahrzeugsensorik 38 des Anhängerfahrzeugs 3.1 umfasst einen vorliegend nicht explizit dargestellten Lenkwinkelsensor zur Erfassung des Lenkwinkels γ zwischen der Längsmittelachse 24 der Deichsel 9 und der Längsmittelachse 18 des Anhängers 3.1 an der Drehachse 11 des Drehschemels 12. Außerdem ist das Steuergerät 26 des Anhängerfahrzeugs 3.1 über gepunktet gezeichnete Steuerungsleitungen mit Bremsaktuatoren 42c, 42d an den Betriebsbremsen des Anhängerfahrzeug 3.1 verbunden.

In dem Zugfahrzeug 2.1 ist ein zweites elektronisches Steuergerät 21 angeordnet, das über Daten- und Signalleitungen mit einem nichtflüchtigen Datenspeicher 22 und mit Sensoren einer Fahrzeugsensorik 37 in Verbindung steht. In dem Datenspeicher 22 sind die Abmessungen und die Fahrwerksgeometrie des Zugfahrzeugs 2.1 abgespeichert. Die Fahrzeugsensorik 37 des Zugfahrzeugs 2.1 umfasst einen vorliegend nicht explizit dargestellten Drehwinkelsensor zur Erfassung des Lenkausschlags α der lenkbaren Räder 5a, 5b der Vorderachse 4 und einen ebenfalls nicht dargestellten Drehwinkelsensor zur Erfassung des Knickwinkels β zwischen der Längsmittelachse 23 des Zugfahrzeugs 2.1 und der Längsmittelachse 24 der Deichsel 9 des Anhängers 3.1 an der Drehachse 25 der Anhängerkupplung 16. Außerdem ist das Steuergerät 21 des Zugfahrzeugs 2.1 über gepunktet gezeichnete Steuerungsleitungen mit Bremsaktuatoren 42a, 42b an den Betriebsbremsen des Zugfahrzeugs 2.1 verbunden. Erkennbar ist das Steuergerät 21 des Zugfahrzeugs 2.1 außerdem über geeignete Leitungen mit einer Anzeigevorrichtung 39 für den Fahrer verbunden, welches in der Fahrerkabine 40 des Zugfahrzeugs 2.1 angeordnet ist. Schließlich ist das Steuergerät 21 des Zugfahrzeugs 2.1 über Steuerungsleitungen mit zumindest einem Lenkaktuator 41 an den lenkbaren Rädern 5a, 5b der Vorderachse 4 des Zugfahrzeugs 2.1 verbunden. Der Lenkwinkel bzw. der Lenkausschlag α kann vorteilhaft direkt am oder im Bereich zumindest eines dieser Lenkaktuatoren 41 gemessen werden.

Die beiden Steuergeräte 21, 26 stehen vorliegend beispielhaft über eine Leitung eines Datenbus 28 drahtgebunden miteinander in Verbindung, bei dem es sich um einen CAN-Bus handeln kann. Um das Abkoppeln des Anhängers 3.1 zu ermöglichen, weist der Datenbus 28 nahe der Anhängerkupplung 16 eine lösbare Steckerverbindung 29 auf.

Gemäß der Erfindung ist vorgesehen, dass bei einem Rangiervorgang, bei dem das Fahrzeuggespann 1.1 aus einer Istposition und Istlage 30.1 im wesentlichen rückwärts in eine Zielposition und Ziellage 31.1 rangiert wird, zunächst in dem Steuergerät 26 des Anhängerfahrzeugs 3.1 die Messdaten der Geräte der Umfeldsensorik (CCD-Kamera 19, Ultraschallsensoren 20a, 20b) und die Messdaten der in dem Anhängerfahrzeug 3.1 vorhandene Fahrzeugsensorik 38 unter Berücksichtigung der Abmessungen und der Fahrwerksgeometrie des Anhängerfahrzeugs 3.1 einschließlich der Deichselgeometrie sowie unabhängig von dem Zugfahrzeug 2.1 ausgewertet werden. Dabei wird eine auf die Drehachse 25 der Gelenkkupplung 15.1, also der Anhängerkupplung 16 bzw. des Kupplungsauges 17 der Deichsel 9 bezogene Soll-Bahnkurve 32.1 bestimmt, die zum Erreichen der Zielposition und Ziellage 31.1 des Anhängerfahrzeugs 3.1 abgefahren werden soll. Anschließend werden die Daten der Soll-Bahnkurve 32.1 von dem Steuergerät 26 des Anhängerfahrzeugs 3.1 an das Steuergerät 21 des Zugfahrzeugs 2.1 übermittelt. In dem Steuergerät 21 des Zugfahrzeugs 2.1 werden die Messdaten der dort vorhandenen Fahrzeugsensorik 37 unter Berücksichtigung der Abmessungen und der Fahrwerksgeometrie des Zugfahrzeugs 2.1 ausgewertet und derjenige Verlauf des Soll-Lenkausschlags αₛ der lenkbaren Räder 5a, 5b der Vorderachse 4 bestimmt, der während des Rangiervorgangs zum Abfahren der vorgegebenen Soll-Bahnkurve 32.1 erforderlich ist.

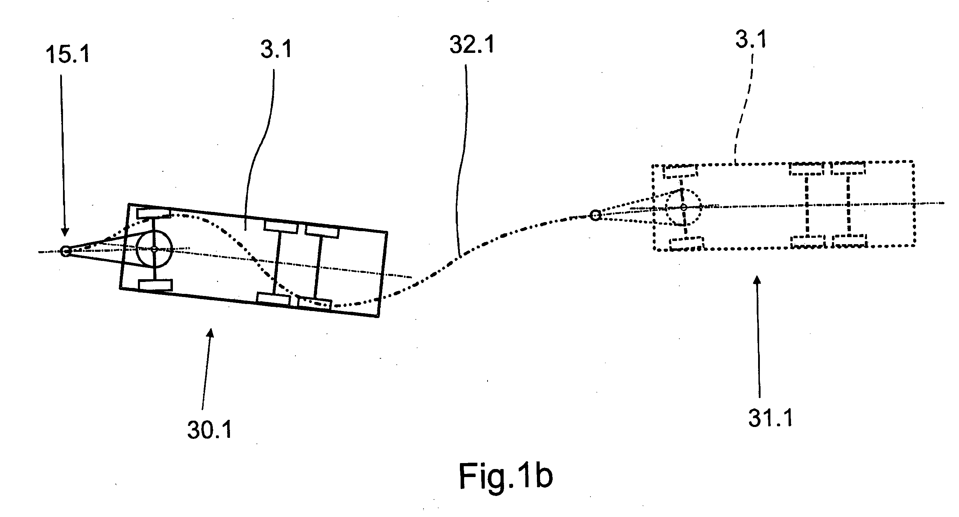

Zur Veranschaulichung eines erfindungsgemäß gesteuerten Rangiervorgangs ist in Fig. 1b nur das Anhängerfahrzeug 3.1 in seiner Istposition und Istlage 30.1 abgebildet, in die das Fahrzeuggespann 1.1 und somit das Anhängerfahrzeug 3.1 zuvor von dem Fahrer gefahren wurde. Die anzufahrende Zielposition und Ziellage 31.1 des Anhängerfahrzeugs 3.1, bei der es sich um die Ladeposition an einer Laderampe oder einer Verladeschleuse eines Logistikgebäudes handeln kann, ist in Fig. 1b durch die gestrichelten Umrisse des Anhängerfahrzeugs 3.1 dargestellt. Die für den Rangiervorgang abzufahrende, auf die Drehachse 25 der Gelenkkupplung 15.1 bezogene Soll-Bahnkurve 32.1 ist in Fig. 1b als eine strichpunktierte Kurve eingezeichnet. Diese ist relativ kompliziert ausgebildet, da der Rahmen des Anhängers 3.1 über zwei Gelenke, nämlich über die Drehachse 11 des Drehschemels 12 und die Drehachse 25 der Gelenkkupplung 15.1, mit dem Zugfahrzeug 2.1 in Verbindung steht.

Während des Rangiervorgangs wird der jeweilige Soll-Lenkausschlag αₛ der lenkbaren Räder 5a, 5b des Zugfahrzeugs 2.1 in einer bevorzugten Ausführungsform in der Fahrerkabine 40 an einer Anzeigevorrichtung 39 optisch angezeigt und kann somit von dem Fahrer am Lenkrad entsprechend eingestellt werden. Sofern, wie in Fig. 1a abgebildet, das Zugfahrzeug 2.1 jedoch über ein Lenkgetriebe verfügt, welches durch einen von dem zweiten Steuergerät 21 ansteuerbaren Lenkaktuator 41 betätigbar ist, kann der jeweilige Soll-Lenkausschlag αₛ der lenkbaren Räder 5a, 5b des Zugfahrzeugs 2.1 während des Rangiervorgangs auch automatisiert eingestellt werden.

Da es während des Rangiervorgangs zu Abweichungen von dem ermittelten Verlauf des Soll-Lenkausschlags αₛ der lenkbaren Räder 5a, 5b des Zugfahrzeugs 2.1 und damit von der vorgegebenen Soll-Bahnkurve 32.1 kommen kann, wird die Ermittlung der Soll-Bahnkurve 32.1 in dem Steuergerät 26 des Anhängerfahrzeugs 3.1 während des Rangiervorgangs vorzugsweise fortlaufend wiederholt. Die derart aktualisierten Daten der Soll-Bahnkurve 32.1 werden dann jeweils an das Steuergerät 21 des Zugfahrzeugs 2.1 übermittelt, in dem die aktualisierte Soll-Bahnkurve 32.1 zur bedarfsweisen Korrektur des Verlaufs des Soll-Lenkausschlags αₛ der lenkbaren Räder 5a, 5b des Zugfahrzeugs 2.1 ausgewertet wird.

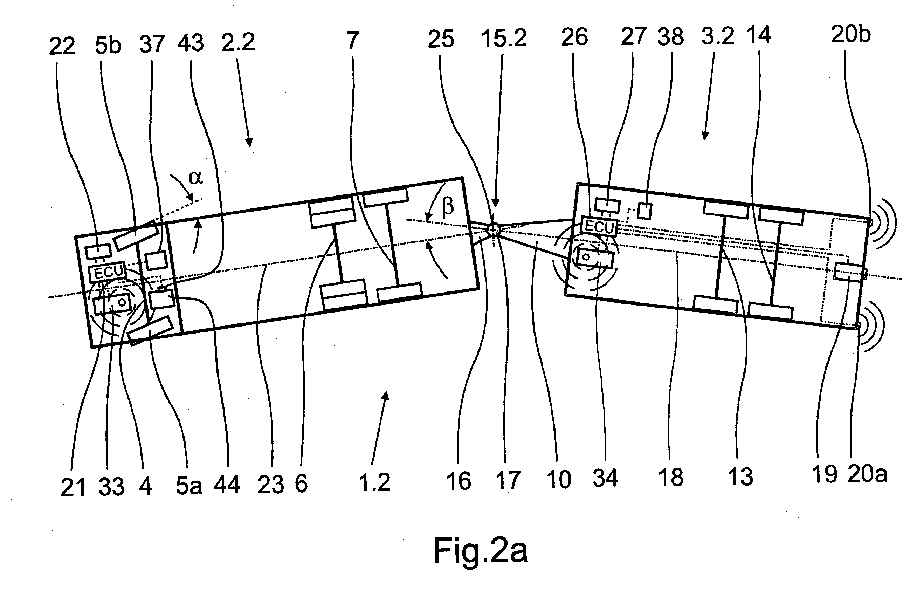

Ein in Fig. 2a in einer schematischen Draufsicht abgebildetes zweites Fahrzeuggespann 1.2 ist ebenfalls als ein Anhängerzug ausgebildet. Im Unterschied zu dem Fahrzeuggespann 1.1 gemäß Fig. 1a ist das Anhängerfahrzeug 3.2 nun aber ohne eine Vorderachse und mit einer starren Deichsel 10 ausgerüstet. Das als Lastkraftwagen mit eigener Ladefläche ausgebildete Zugfahrzeug 2.2 ist gegenüber der Variante gemäß Fig. 1a länger ausgebildet und weist eine angetriebene erste Hinterachse 6 sowie eine nicht angetriebene zweite Hinterachse 7 auf. Ein weiterer Unterschied zu dem Fahrzeuggespann 1.1 gemäß Fig. 1a besteht darin, dass die beiden Steuergeräte 21, 26 vorliegend beispielhaft drahtlos miteinander in Verbindung stehen. Hierzu ist jedem der beiden Steuergeräte 21, 26 jeweils eine kombinierte Funk-Sende- und Funk-Empfangseinheit 33, 34 zugeordnet, über die der Datenaustausch zwischen den Steuergeräten 21, 26 erfolgen kann.

Außerdem ist in Fig. 2a erkennbar, dass das Zugfahrzeug 2.2 in dieser Ausführungsvariante ein schaltbares Fahrgetriebe 44 aufweist, welches mittels eines Schaltaktuators 43 aufgrund eines Steuerungsbefehls des Steuergeräts 21 des Zugfahrzeugs 2.2 selbsttätig schaltbar ist. Der Schaltaktuator 43 ist hierzu mit dem Steuergerät 21 des Zugfahrzeugs 2.2 über eine punktiert gezeichnete Steuerungsleitung verbunden. In gleicher Weise ist auch ein Kupplungsaktuator einer zwischen dem Antriebsmotor des Zugfahrzeugs 2.2 und dem Fahrgetriebe 44 angeordneten Fahrkupplung mit dem Steuergerät 21 des Zugfahrzeugs 2.2 über eine Steuerungsleitung verbunden ist. Der Antriebsmotor, die Fahrkupplung, der Kupplungsaktuator sowie die Steuerungsleitung sind aus Gründen der Übersichtlichkeit zeichnerisch nicht dargestellt, einem Fachmann aber an sich bekannt. Bei diesem Aufbau ist ein autonom ablaufender Rangiervorgang des Fahrzeuggespanns 1.2 auch unter Einschluss des jeweils optimalen Getriebegangs durchführbar.

Der Verfahrensablauf zur Steuerung des Rangiervorgangs ist im Prinzip identisch zu demjenigen des Fahrzeuggespanns 1.1 gemäß Fig. 1 a. Bei einem Rangiervorgang, bei dem das Fahrzeuggespann 1.2 aus einer Istposition und Istlage 30.2 im wesentlichen rückwärts in eine Zielposition und Ziellage 31.2 rangiert werden soll, werden zunächst in dem Steuergerät 26 des Anhängerfahrzeugs 3.2 die Messdaten der Umfeldsensorik (19, 20a, 20b) und die Messdaten der an dem Anhängerfahrzeug 3.2 vorhandenen Fahrzeugsensorik 38 unter Berücksichtigung der Abmessungen und der Fahrwerksgeometrie des Anhängerfahrzeugs 3.2 einschließlich der Deichselgeometrie unabhängig von dem Zugfahrzeug 2.2 ausgewertet und eine auf die Drehachse 25 der Gelenkkupplung 15.2, also der Anhängerkupplung 16 bzw. des Kupplungsauges 17 der Deichsel 10 bezogene Soll-Bahnkurve 32.2 bestimmt, die zum Erreichen der Zielposition und Ziellage 31.2 des Anhängerfahrzeugs 3.2 abgefahren werden soll. Anschließend werden die Daten der Soll-Bahnkurve 32.2 an das Steuergerät 21 des Zugfahrzeugs 2.2 übermittelt, in dem die Messdaten der dort vorhandenen Fahrzeugsensorik 37 unter Berücksichtigung der Abmessungen und der Fahrwerksgeometrie des Zugfahrzeugs 2.2 ausgewertet sowie derjenige Verlauf des Soll-Lenkausschlags αₛ der lenkbaren Räder 5a, 5b der Vorderachse 4 bestimmt wird, der während des Rangiervorgangs zum Abfahren der vorgegebenen Soll-Bahnkurve 32.2 erforderlich ist.

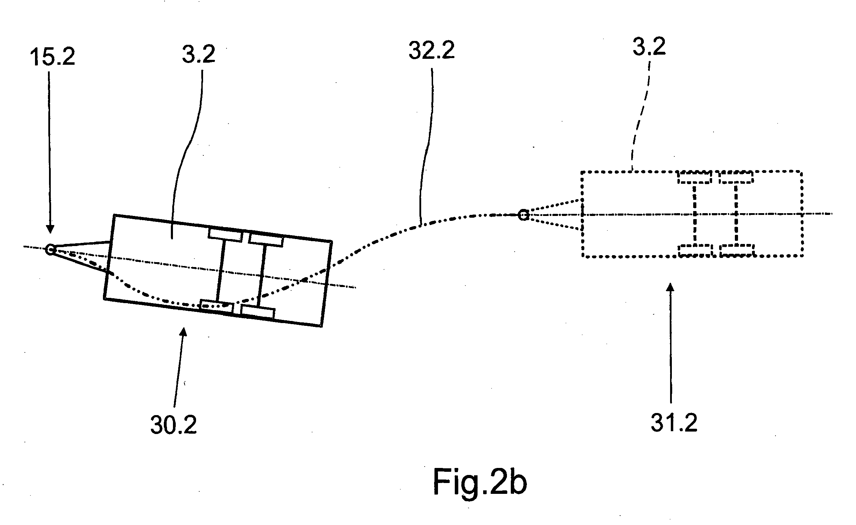

Analog zu Fig. 1b ist zur Veranschaulichung des erfindungsgemäß gesteuerten Rangiervorgangs in Fig. 2b nur der Anhänger 3.2 in seiner Istposition und Istlage 30.2 abgebildet, in die das Fahrzeuggespann 1.2 und somit der Anhänger 3.2 zuvor von dem Fahrer gefahren wurde. Die anzufahrende Zielposition und Ziellage 31.2 des Anhängers 3.2 ist in Fig. 2b wiederum durch die gestrichelten Umrisse des Anhängers 3.2 dargestellt. Die für den Rangiervorgang abzufahrende, auf die Drehachse 25 der Gelenkkupplung 15.2 bezogene Soll-Bahnkurve 32.2 ist in Fig. 2b erneut als eine strichpunktierte Kurve eingezeichnet. Da der Rahmen des Anhängers 3.2 vorliegend nur über ein einziges Gelenk, nämlich über die Drehachse 25 der Gelenkkupplung 15.2, mit dem Zugfahrzeug 2.2 in Verbindung steht, ist der Kurvenverlauf der bei dem Rangiervorgang einzuhaltenden Soll-Bahnkurve 32.2 nun vergleichsweise einfach ausgebildet.

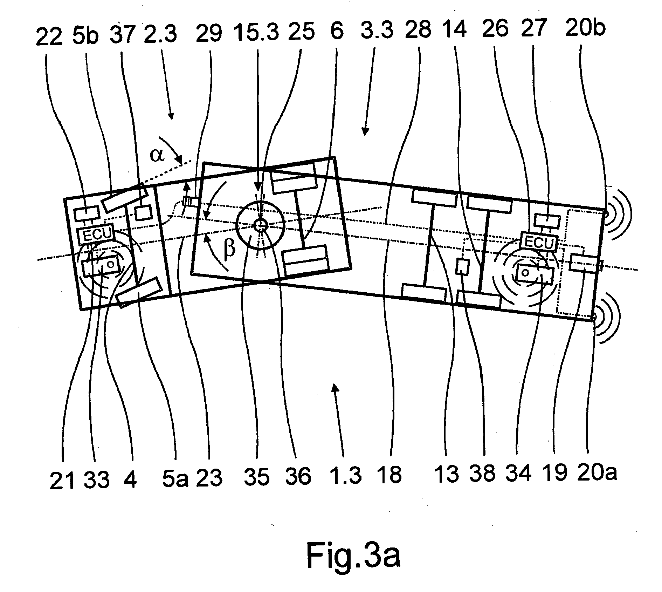

Ein in Fig. 3a in einer schematischen Draufsicht abgebildetes drittes Fahrzeuggespann 1.3 ist im Unterschied zu den vorbeschriebenen Fahrzeuggespannen 1.1,1.2 gemäß Fig. 1a und Fig. 2a nun als Sattelzug ausgebildet. Demzufolge ist das Zugfahrzeug 2.3 nun als eine zweiachsige Sattelzugmaschine und das Anhängerfahrzeug 3.3 als ein zweiachsiger Sattelauflieger ausgebildet. Ebenso wird die Gelenkkupplung 15.3, über die das Zugfahrzeug 2.3 und das Anhängerfahrzeug 3.3 miteinander gekoppelt sind, nun durch die am Rahmen der Sattelzugmaschine 2.3 befestigten Sattelkupplung 35 und durch die am Rahmen des Sattelaufliegers 3.3 befestigten Königszapfen 36 gebildet. Des weiteren stehen die beiden Steuergeräte 21, 26 vorliegend beispielhaft sowohl über einen Datenbus 28 als auch über jeweils eine kombinierte Funk-Sende- und Funk-Empfangseinheit 33, 34 miteinander in Verbindung, so dass der Datenaustausch zwischen den Steuergeräten 21, 26 wahlweise drahtgebunden oder drahtlos erfolgen kann.

Der Verfahrensablauf zur Steuerung des Rangiervorgangs ist im Prinzip identisch zu denjenigen der Fahrzeuggespanne 1.1,1.2 gemäß Fig. 1a und Fig. 2a. Bei einem Rangiervorgang, bei dem das Fahrzeuggespann 1.3 aus einer Istposition und Istlage 30.3 im wesentlichen rückwärts in eine Zielposition und Ziellage 31.3 rangiert wird, werden zunächst in dem Steuergerät 26 des Anhängerfahrzeugs 3.3 die Messdaten der Umfeldsensorik (19, 20a, 20b) und die Messdaten der an dem Sattelauflieger 3.3 vorhandenen Fahrzeugsensorik 38 unter Berücksichtigung der Abmessungen und der Fahrwerksgeometrie des Anhängerfahrzeugs 3.3 unabhängig von dem Zugfahrzeug 2.3 ausgewertet sowie eine auf die Drehachse 25 der Gelenkkupplung 15.3, also der Sattelkupplung 35 bzw. des Königszapfens 36 bezogene Soll-Bahnkurve 32.3 bestimmt, die zum Erreichen der Zielposition und Ziellage 31.3 des Anhängerfahrzeugs 3.3 abgefahren werden soll. Anschließend werden die Daten der Soll-Bahnkurve 32.3 an das Steuergerät 21 des Zugfahrzeugs 2.3 übermittelt, in dem die Messdaten der dort vorhandenen Fahrzeugsensorik 37 unter Berücksichtigung der Abmessungen und der Fahrwerksgeometrie des Zugfahrzeugs 2.3 ausgewertet und derjenige Verlauf des Soll-Lenkausschlags αₛ der lenkbaren Räder 5a, 5b der Vorderachse 4 bestimmt wird, der während des Rangiervorgangs zum Abfahren der vorgegebenen Soll-Bahnkurve 32.3 erforderlich ist.

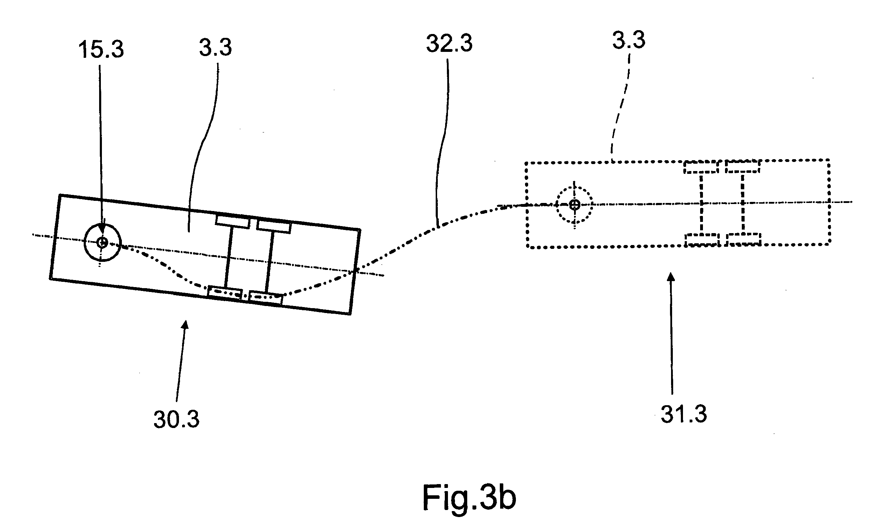

Analog zu Fig. 1b und Fig. 2b ist zur Veranschaulichung des erfindungsgemäß gesteuerten Rangiervorgangs in Fig. 3b nur der Sattelauflieger 3.3 in seiner Istposition und Istlage 30.3 abgebildet, in die das Fahrzeuggespann 1.3 und somit der Sattelauflieger 3.3 zuvor von dem Fahrer gefahren wurde. Die anzufahrende Zielposition und Ziellage 31.3 des Sattelaufliegers 3.3 ist in Fig. 3b durch die gestrichelten Umrisse des Sattelaufliegers 3.3 dargestellt. Die für den Rangiervorgang abzufahrende, auf die Drehachse 25 der Gelenkkupplung 15.3 bezogene Soll-Bahnkurve 32.3 ist in Fig. 3b wiederum als eine strichpunktierte Kurve eingezeichnet. Da der Rahmen des Sattelaufliegers 3.3 wie bei dem Anhängerfahrzeug 3.2 des Anhängerzuges 1.2 gemäß Fig. 2a nur über ein einziges Gelenk, nämlich über die Drehachse 25 der Gelenkkupplung 15.3 mit dem Zugfahrzeug 2.3 in Verbindung steht, ist der Kurvenverlauf der bei dem Rangiervorgang einzuhaltenden Soll-Bahnkurve 32.3 wieder vergleichsweise einfach ausgebildet.

Das erfindungsgemäße Verfahren sieht somit bei allen Varianten vor, dass in dem Steuergerät 26 des Anhängerfahrzeugs 3.1, 3.2, 3.3 diejenige auf die Gelenkkupplung 15.1, 15.2, 15.3 bezogene Soll-Bahnkurve 32.1, 32.2, 32.3 unabhängig von dem jeweils vorhandenen Zugfahrzeug 2.1, 2.2, 2.3 bestimmt wird, die zum Erreichen der Zielposition 31.1, 31.2, 31.3 des Anhängerfahrzeugs 3.1, 3.2, 3.3 abgefahren werden soll, und dass anschließend in dem Steuergerät 21 des Zugfahrzeugs 2.1, 2.2, 2.3 der Verlauf des Soll-Lenkausschlags αₛ der lenkbaren Räder 5a, 5b des Zugfahrzeugs 2.1, 2.2, 2.3 bestimmt wird, der während des Rangiervorgangs zur Einhaltung der Soll-Bahnkurve 32.1, 32.2, 32.3 erforderlich ist. Hierdurch kann das jeweilige Fahrzeuggespann 1.1, 1.2, 1.3 aus einem beliebigen Zugfahrzeug 2.1, 2.2, 2.3 und einem beliebigen Anhängerfahrzeug 3.1, 3.2, 3.3 bestehen, sofern diese jeweils über eine passende Anhängerkupplung 16 bzw. ein passendes Kupplungsauge 17 der Deichsel 9, 10 oder über eine passende Sattelkupplung 35 bzw. einen passenden Königszapfen 36 verfügen. Somit bietet das erfindungsgemäße Verfahren z.B. einer Spedition eine hohe Flexibilität bei der Zusammenstellung der Fahrzeuggespanne 1.1,1.2, 1.3 und ermöglicht den Einsatz einer speziellen Rangier-Zugmaschine zum Rangieren unterschiedlicher Anhängerfahrzeuge 3.1, 3.2, 3.3 auf einem Speditionshof.

Dadurch, dass das Steuergerät 21 des Zugfahrzeugs 2.1 gemäß dem Ausführungsbeispiel der Fig. 1 mit den bereits genannten Lenkaktuatoren 41 an der Vorderachse 4 des Zugfahrzeugs sowie mit Bremsaktuatoren 42a, 42b am Zugfahrzeug 2.1 und über den CAN-Bus 28 mit Bremsaktuatoren 42c, 42d am Anhängerfahrzeug 3.1 verbunden ist, kann das beschriebene Rückwärtsrangieren völlig automatisch ablaufen, wobei der Fahrer den Rangiervorgang mit Hilfe der Anzeigevorrichtung 39 in der Fahrerkabine 40 nur zu überwachen braucht. Ein aktiver und den automatischen Verlauf übersteuernder Eingriff durch den Fahrer ist dabei jederzeit möglich, etwa durch eine manuelle Lenkbewegung des Lenkrads des Zugfahrzeugs und/oder eine manuelle Betätigung der Fahrzeugbetriebsbremse durch Betätigen des Bremspedals.

## Patentansprüche

1. Verfahren zur Steuerung des Rangiervorgangs eines Fahrzeuggespanns (1.1, 1.2, 1.3), das ein motorisiertes Zugfahrzeug (2.1, 2.2, 2.3) und ein Anhängerfahrzeug (3.1, 3.2, 3.3) umfasst, die über eine Gelenkkupplung (15.1, 15.2, 15.3) miteinander gekoppelt sind, wobei das Fahrzeuggespann eine Zugfahrzeugsensorik (37) und eine Anhängerfahrzeugsensorik (38) zur Erfassung seiner Istposition und Istlage (30.1, 30.2, 30.3) aufweist, und bei dem zumindest das Anhängerfahrzeug mit einer Umfeldsensorik (19, 20a, 20b) zur Erfassung der rückwärtigen Gespannumgebung versehen ist, wobei bei einem Rangiervorgang, bei dem das Fahrzeuggespann (1.1, 1.2, 1.3) im wesentlichen rückwärts in eine Zielposition und Ziellage (31.1, 31.2, 31.3) rangiert wird, die von der Umfeldsensorik (19, 20) erfassten Messdaten ausgewertet werden, mindestens eine Zielposition und Ziellage des Fahrzeuggespanns ermittelt wird, und eine Bahnkurve bestimmt wird, auf der das Fahrzeuggespann von der Istposition und Istlage in die Zielposition und Ziellage rangierbar ist, **dadurch gekennzeichnet, dass** in einem an dem Anhängerfahrzeug (3.1, 3.2, 3.3) angeordneten ersten elektronischen Steuergerät (26) die Messdaten der Umfeldsensorik (19, 20) und die Messdaten der an dem Anhängerfahrzeug (3.1, 3.2, 3.3) vorhandene Anhängerfahrzeugsensorik (38) unter Berücksichtigung der Abmessungen, der Fahrwerksgeometrie und der Deichselgeometrie des Anhängerfahrzeugs ausgewertet sowie eine auf die Drehachse (25) der Gelenkkupplung (15.1, 15.2, 15.3) bezogene Soll-Bahnkurve (32.1, 32.2, 32.3) bestimmt wird, die zum Erreichen der Zielposition und Ziellage (31.1, 31.2, 31.3) des Anhängerfahrzeugs abgefahren werden soll, dass dann die Daten der Soll-Bahnkurve (32.1, 32.2, 32.3) von dem ersten elektronischen Steuergerät (26) des Anhängerfahrzeugs an ein an dem Zugfahrzeug (2.1, 2.2, 2.3) angeordneten zweiten elektronischen Steuergerät (21) übermittelt werden, dass dann in dem zweiten elektronischen Steuergerät (21) die Messdaten der Zugfahrzeugsensorik (37) unter Berücksichtigung der Abmessungen und der Fahrwerksgeometrie des Zugfahrzeugs ausgewertet sowie derjenige streckenbezogene Verlauf des Soll-Lenkausschlags (αₛ) der lenkbaren Räder (5a, 5b) des Zugfahrzeugs bestimmt wird, der während des Rangiervorgangs zum Abfahren der übermittelten Soll-Bahnkurve (32.1, 32.2, 32.3) erforderlich ist, und dass dann das Fahrzeuggespann (1.1, 1.2, 1.3) bei seiner Rückwärtsfahrt entlang der vorgegebenen Soll-Bahnkurve (32.1, 32.2, 32.3) gesteuert wird.

2. Verfahren nach Anspruch 1, **dadurch gekennzeichnet, dass** die Ermittlung der Soll-Bahnkurve (32.1, 32.2, 32.3) in dem Steuergerät (26) des Anhängerfahrzeugs (3.1, 3.2, 3.3) während des Rangiervorgangs fortlaufend wiederholt und die derart aktualisierten Daten der Soll-Bahnkurve jeweils an das Steuergerät (21) des Zugfahrzeugs (2.1, 2.2, 2.3) übermittelt werden, in dem die aktualisierte Soll-Bahnkurve zur bedarfsweisen Korrektur des Verlaufs des Soll-Lenkausschlags (αₛ) der lenkbaren Räder (5a, 5b) des Zugfahrzeugs ausgewertet wird.

3. Verfahren nach Anspruch 1 oder 2, **dadurch gekennzeichnet, dass** während des Rangiervorgangs der jeweilige Soll-Lenkausschlag (αₛ) oder die Differenz (Δαₛ) zwischen dem Soll-Lenkausschlag (αₛ) und dem Ist-Lenkausschlag (α) der lenkbaren Räder (5a, 5b) des Zugfahrzeugs (2.1, 2.2, 2.3) in der Fahrerkabine (40) des Zugfahrzeugs optisch angezeigt wird.

4. Verfahren nach einem der Ansprüche 1 bis 3, **dadurch gekennzeichnet, dass** bei einem Zugfahrzeug (2.1, 2.2, 2.3), das über ein durch einen ansteuerbaren Lenkaktuator (41) betätigbares Lenkgetriebe verfügt, während des Rangiervorgangs der jeweilige Soll-Lenkausschlag (αₛ) der lenkbaren Räder (5a, 5b) des Zugfahrzeugs automatisiert eingestellt wird.

5. Verfahren nach einem der Ansprüche 1 bis 4, **dadurch gekennzeichnet, dass** während des Rangiervorgangs die Fahrtrichtung zum Abfahren der Soll-Bahnkurve (32.1, 32.2, 32.3) in der Fahrerkabine (40) des Zugfahrzeugs (2.1, 2.2, 2.3) optisch angezeigt wird.

6. Verfahren nach einem der Ansprüche 1 bis 5, **dadurch gekennzeichnet, dass** bei einem Zugfahrzeug (2.1, 2.2, 2.3), welches über ein schaltbares Fahrgetriebe (44) mit einem ansteuerbaren Schaltaktuator (43) verfügt, während des Rangiervorgangs der jeweilige Rangiergang automatisiert eingelegt wird.

7. Verfahren nach einem der Ansprüche 1 bis 6, **dadurch gekennzeichnet, dass** bei dem Rangiervorgang das Erreichen der Zielposition und Ziellage (31.1, 31.2, 31.3) des Anhängerfahrzeugs (3.1, 3.2, 3.3) in der Fahrerkabine (40) des Zugfahrzeugs (2.1, 2.2, 2.3) optisch und/oder akustisch angezeigt wird.

8. Verfahren nach einem der Ansprüche 1 bis 7, **dadurch gekennzeichnet, dass** bei einem Zugfahrzeug (2.1, 2.2, 2.3), das über eine durch einen ansteuerbaren Bremsaktuator (42a, 42b, 42c, 42d) betätigbare Betriebsbremse verfügt, bei dem Rangiervorgang bei Erreichen der Zielposition und Ziellage (31.1, 31.2, 31.3) des Anhängerfahrzeugs (3.1, 3.2, 3.3) die Betriebsbremse automatisiert betätigt wird.

9. Verfahren nach einem der Ansprüche 1 bis 8, **dadurch gekennzeichnet, dass** die Daten der Soll-Bahnkurve (32.1, 32.2, 32.3) von dem Steuergerät (26) des Anhängerfahrzeugs (3.1, 3.2, 3.3) drahtgebunden und/oder drahtlos an das Steuergerät (21) des Zugfahrzeugs (2.1, 2.2, 2.3) übermittelt werden.

10. Verfahren nach einem der Ansprüche 1 bis 9, **dadurch gekennzeichnet, dass** dann, wenn die Auswertung der Umfeldsensorik (19, 20a, 20b) in dem Steuergerät (26) des Anhängerfahrzeugs (3.1, 3.2, 3.3) mehrere mögliche Zielpositionen und Ziellagen des Anhängerfahrzeugs ergibt, die Soll-Bahnkurve (32.1, 32.2, 32.3) für diejenige Zielposition und Ziellage (31.1, 31.2, 31.3) ermittelt wird, für welche die geringste Änderung der aktuellen Lage des Anhängerfahrzeugs und/oder die geringste Änderung des aktuellen Lenkwinkels (γ) der Deichsel (9) erforderlich ist.

11. Verfahren nach einem der Ansprüche 1 bis 9, **dadurch gekennzeichnet, dass** dann, wenn die Auswertung der Umfeldsensorik (19, 20a, 20b) in dem Steuergerät (26) des Anhängerfahrzeugs (3.1, 3.2, 3.3) mehrere mögliche Zielpositionen und Ziellagen des Anhängerfahrzeugs ergibt, diese Zielpositionen und Ziellagen über die Verbindung mit dem Steuergerät (21) des Zugfahrzeugs (2.1, 2.2, 2.3) in geeigneter Form in der Fahrerkabine (40) des Zugfahrzeugs optisch angezeigt werden, der Fahrer über eine Eingabeeinrichtung die gewünschte Zielposition und Ziellage (31.1, 3.1.2, 31.3) des Anhängerfahrzeugs auswählen kann, und die ausgewählte Zielposition und Ziellage an das Steuergerät (26) des Anhängerfahrzeugs (3.1, 3.2, 3.3) übermittelt wird, in dem dann die zugeordnete Soll-Bahnkurve (32.1, 32.2, 32.3) bestimmt wird.

12. Vorrichtung zur Steuerung des Rangiervorgangs eines Fahrzeuggespanns (1.1, 1.2, 1.3), das ein motorisiertes Zugfahrzeug (2.1, 2.2, 2.3) und ein Anhängerfahrzeug (3.1, 3.2, 3.3) umfasst, die über eine Gelenkkupplung (15.1, 15.2, 15.3) miteinander gekoppelt sind, wobei das Fahrzeuggespann eine Zugfahrzeugsensorik (37) und eine Anhängerfahrzeugsensorik (38) zur Erfassung seiner Istposition und Istlage (30.1, 30.2, 30.3) aufweist, und bei dem zumindest das Anhängerfahrzeug mit einer Umfeldsensorik (19, 20a, 20b) zur Erfassung der rückwärtigen Gespannumgebung versehen ist, wobei bei einem Rangiervorgang, bei dem das Fahrzeuggespann (1.1, 1.2, 1.3) im wesentlichen rückwärts in eine Zielposition und Ziellage (31.1, 31.2, 31.3) rangiert wird, die von der Umfeldsensorik (19, 20a, 20b) erfassten Messdaten auswertbar sind, mindestens eine Zielposition und Ziellage des Fahrzeuggespanns ermittelbar ist, und eine Bahnkurve bestimmbar ist, auf der das Fahrzeuggespann von der Istposition und Istlage in die Zielposition und Ziellage rangierbar ist, **dadurch gekennzeichnet, dass** an dem Anhängerfahrzeug (3.1, 3.2, 3.3) ein erstes elektronisches Steuergerät (26) vorhanden ist, in dem die Messdaten der Umfeldsensorik (19, 20a, 20b) und die Messdaten der an dem Anhängerfahrzeug vorhandenen Anhängerfahrzeugsensorik (38) unter Berücksichtigung der Abmessungen und der Fahrwerksgeometrie des Anhängerfahrzeugs einschließlich der Deichselgeometrie auswertbar sowie eine auf die Drehachse (25) der Gelenkkupplung (15.1, 15.2, 15.3) bezogene Soll-Bahnkurve (32.1, 32.2, 32.3) bestimmbar ist, die zum Erreichen der Zielposition und Ziellage (31.1, 31.2, 32.3) des Anhängerfahrzeugs abgefahren werden soll, dass an dem Zugfahrzeug (2.1, 2.2, 2.3) ein zweites elektronisches Steuergerät (21) vorhanden ist, an das von dem ersten Steuergerät (26) die Daten der Soll-Bahnkurve (32.1, 32.2, 32.3) übermittelbar sind, dass in dem zweiten elektronischen Steuergerät (21) die Messdaten der Zugfahrzeugsensorik (37) unter Berücksichtigung der Abmessungen und der Fahrwerksgeometrie des Zugfahrzeugs auswertbar sind, dass in dem zweiten elektronischen Steuergerät (21) derjenige streckenbezogene Verlauf des Soll-Lenkausschlags (αₛ) der lenkbaren Räder (5a, 5b) des Zugfahrzeugs bestimmbar ist, der während des Rangiervorgangs zum Abfahren der übermittelten Soll-Bahnkurve (32.1, 32.2, 32.3) erforderlich ist.

13. Vorrichtung nach Anspruch 12, **dadurch gekennzeichnet, dass** das zweite elektronische Steuergerät (21) mit einer Anzeigevorrichtung (39) in der Fahrerkabine (40) des Zugfahrzeugs (2.1, 2.2, 2.3) und/oder mit Lenkaktuatoren (41) an den lenkbaren Rädern (5a, 5b) des Zugfahrzeugs und/oder mit Bremsaktuatoren (42a, 42b; 42c, 42d) an der Fahrbremse des Zugfahrzeugs (2.1, 2.2, 2.3) sowie des Anhängerfahrzeugs (3.1, 3.2, 3.3) und/oder mit einem Schaltaktuator (41) an einem schaltbaren Fahrgetriebe (41) und/oder mit einem Kupplungsaktuator an einer schaltbaren Fahrkupplung verbunden ist.

14. Vorrichtung nach Anspruch 13, **dadurch gekennzeichnet, dass** Daten, welche die Abmessungen und die Fahrwerksgeometrie des Anhängerfahrzeugs (3.1, 3.2, 3.3) einschließlich der Deichselgeometrie enthalten, in einem dem Anhängerfahrzeug zugeordneten nichtflüchtigen Datenspeicher (27) abgespeichert sind, der mit dem Steuergerät (26) des Anhängerfahrzeugs in Verbindung steht.

15. Vorrichtung nach Anspruch 12 oder 14, **dadurch gekennzeichnet, dass** Daten, welche die Abmessungen und die Fahrwerksgeometrie des Zugfahrzeugs (2.1, 2.2, 2.3) enthalten, in einem dem Zugfahrzeug zugeordneten nichtflüchtigen Datenspeicher (22) abgespeichert sind, der mit dem Steuergerät (21) des Zugfahrzeugs in Verbindung steht.

16. Vorrichtung nach einem der Ansprüche 12 bis 15, **dadurch gekennzeichnet, dass** das Steuergerät (26) des Anhängerfahrzeugs (3.1, 3.3) und das Steuergerät (21) des Zugfahrzeugs (2.1, 2.3) über einen Datenbus (28) miteinander in Verbindung stehen, der zum An- und Abkoppeln des Anhängerfahrzeugs eine nahe der Gelenkkupplung (15.1, 15.3) angeordnete lösbare Steckerverbindung (29) aufweist.

17. Vorrichtung nach einem der Ansprüche 12 bis 16, **dadurch gekennzeichnet, dass** dem Steuergerät (26) des Anhängerfahrzeugs (3.2, 3.3) und dem Steuergerät (21) des Zugfahrzeugs (2.2, 2.3) jeweils eine Funk-Sende- und Funk-Empfangseinheit (33, 34) zugeordnet ist, über welche die beiden Steuergeräte (21, 26) drahtlos miteinander in Verbindung bringbar sind.

## Claims

1. Method for controlling the manoeuvring process of an articulated vehicle (1.1, 1.2, 1.3) which comprises a motorized traction vehicle (2.1, 2.2, 2.3) and a trailer vehicle (3.1, 3.2, 3.3) which are coupled to one another via an articulation coupling (15.1, 15.2, 15.3), wherein the articulated vehicle has a traction vehicle sensor system (37) and a trailer vehicle sensor system (38) for detecting its actual position and actual location (30.1, 30.2, 30.3), and in which at least the trailer vehicle is provided with a surroundings sensor system (19, 20a, 20b) for detecting the surroundings to the rear of the articulated vehicle, wherein in a manoeuvring process during which the articulated vehicle (1.1, 1.2, 1.3) is manoeuvred essentially to the rear into a target position and target location (31.1, 31.2, 31.3) the measurement data acquired by the surroundings sensor system (19, 20) is evaluated, at least one target position and target location of the articulated vehicle are identified, and a trajectory on which the articulated vehicle can be manoeuvred from the actual position and actual location into the target position and target location is determined, **characterized in that** in a first electronic control unit (26) which is arranged on the trailer vehicle (3.1, 3.2, 3.3) the measurement data of the surroundings sensor system (19, 20) and the measurement data of the trailer vehicle sensor system (38) which is present on the trailer vehicle (3.1, 3.2, 3.3) is evaluated taking into account the dimensions, the chassis geometry and the drawbar geometry of the trailer vehicle, and a setpoint trajectory (32.1, 32.2, 32.3) which is referred to the rotational axis (25) of the articulation coupling (15.1, 15.2, 15.3) is determined, which setpoint trajectory (32.1, 32.2, 32.3) is to be travelled along in order to reach the target position and target location (31.1, 31.2, 31.3) of the trailer vehicle, **in that** the data of the setpoint trajectory (32.1, 32.2, 32.3) is then transmitted from the first electronic control unit (26) of the trailer vehicle to a second electronic control unit (21) which is arranged on the traction vehicle (2.1, 2.2, 2.3), **in that** in the second electronic control unit (21) the measurement data of the traction vehicle sensor system (37) is then evaluated taking into account the dimensions and the chassis geometry of the traction vehicle and that route-related profile of the setpoint steering lock (αₛ) of the steerable wheels (5a, 5b) of the traction vehicle which is necessary to travel along the transmitted setpoint trajectory (32.1, 32.2, 32.3) during the manoeuvring process is determined, and **in that** the articulated vehicle (1.1, 1.2, 1.3) is then steered along the predefined setpoint trajectory (32.1, 32.2, 32.3) during its reverse travel.

2. Method according to Claim 1, **characterized in that** the determination of the setpoint trajectory (32.1, 32.2, 32.3) in the control unit (26) of the trailer vehicle (3.1, 3.2, 3.3) is repeated continuously during the manoeuvring process and the data of the setpoint trajectory which is updated in this way is respectively transmitted to the control unit (21) of the traction vehicle (2.1, 2.2, 2.3) in which the updated setpoint trajectory is evaluated in order to correct the profile of the setpoint steering lock (αₛ) of the steerable wheels (5a, 5b) of the traction vehicle as required.

3. Method according to Claim 1 or 2, **characterized in that** during the manoeuvring process the respective setpoint steering lock (αₛ) or the difference Δαₛ) between the setpoint steering lock (αₛ) and the actual steering lock (α) of the steerable wheels (5a, 5b) of the traction vehicle (2.1, 2.2, 2.3) is displayed visually in the driver's cab (40) of the traction vehicle.

4. Method according to one of Claims 1 to 3, **characterized in that** in the case of a traction vehicle (2.1, 2.2, 2.3) which has a steering gear which can be actuated by means of an actuable steering actuator (41), the respective setpoint steering lock (αₛ) of the steerable wheels (5a, 5b) of the traction vehicle is set in an automated fashion during the manoeuvring process.

5. Method according to one of Claims 1 to 4, **characterized in that** during the manoeuvring process the direction of travel for travelling along the setpoint trajectory (32.1, 32.2, 32.3) is displayed visually in the driver's cab (40) of the traction vehicle (2.1, 2.2, 2.3).

6. Method according to one of Claims 1 to 5, **characterized in that** in a traction vehicle (2.1, 2.2, 2.3), which has a shiftable transmission (44) with an actuable shift actuator (43), the respective manoeuvring gear speed is engaged in an automated fashion during the manoeuvring process.

7. Method according to one of Claims 1 to 6, **characterized in that** in the manoeuvring process the fact that the target position and target location (31.1, 31.2, 31.3) of the trailer vehicle (3.1, 3.2, 3.3) have been reached is displayed visually and/or indicated acoustically in the driver's cab (40) of the traction vehicle (2.1, 2.2, 2.3).

8. Method according to one of Claims 1 to 7, **characterized in that** in the case of a traction vehicle (2.1, 2.2, 2.3), which has a service brake which can be actuated by means of an actuable brake actuator (42a, 42b, 42c, 42d), during the manoeuvring process the service brake is actuated in an automated fashion when the target position and target location (31.1, 31.2, 31.3) of the trailer vehicle (3.1, 3.2, 3.3) have been reached.

9. Method according to one of Claims 1 to 8, **characterized in that** the data of the setpoint trajectory (32.1, 32.2, 32.3) is transmitted from the control unit (26) of the trailer vehicle (3.1, 3.2, 3.3) in a wire-bound and/or wireless fashion to the control unit (21) of the traction vehicle (2.1, 2.2, 2.3).

10. Method according to one of Claims 1 to 9, **characterized in that** if the evaluation of the surroundings sensor system (19, 20a, 20b) in the control unit (26) of the trailer vehicle (3.1, 3.2, 3.3) results in a plurality of possible target positions and target locations of the trailer vehicle, the setpoint trajectory (32.1, 32.2, 32.3) is determined for that target position and target location (31.1, 31.2, 31.3) for which the smallest change in the current location of the trailer vehicle and/or the smallest change in the current steering angle (γ) of the drawbar (9) are/is necessary.

11. Method according to one of Claims 1 to 9, **characterized in that** if the evaluation of the surroundings sensor system (19, 20a, 20b) in the control unit (26) of the trailer vehicle (3.1, 3.2, 3.3) results in a plurality of possible target positions and target locations of the trailer vehicle, these target positions and target locations are displayed visually in a suitable form in the driver's cab (40) of the traction vehicle via the connection to the control unit (21) of the traction vehicle (2.1, 2.2, 2.3), and the driver can select the desired target position and target location (31.1, 31.2, 31.3) of the trailer vehicle via an input device and the selected target position and target location are transmitted to the control unit (26) of the trailer vehicle (3.1, 3.2, 3.3), in which control unit (26) the assigned setpoint trajectory (32.1, 32.2, 32.3) is then determined.

12. Device for controlling the manoeuvring process of an articulated vehicle (1.1, 1.2, 1.3) which comprises a motorized traction vehicle (2.1, 2.2, 2.3) and a trailer vehicle (3.1, 3.2, 3.3) which are coupled to one another via an articulation coupling (15.1, 15.2, 15.3), wherein the articulated vehicle has a traction vehicle sensor system (37) and a trailer vehicle sensor system (38) for detecting its actual position and actual location (30.1, 30.2, 30.3), and in which at least the trailer vehicle is provided with a surroundings sensor system (19, 20a, 20b) for detecting the surroundings to the rear of the articulated vehicle, wherein in a manoeuvring process during which the articulated vehicle (1.1, 1.2, 1.3) is manoeuvred essentially to the rear into a target position and target location (31.1, 31.2, 31.3) the measurement data acquired by the surroundings sensor system (19, 20a, 20b) can be evaluated, at least one target position and target location of the articulated vehicle can be identified, and a trajectory on which the articulated vehicle can be manoeuvred from the actual position and actual location into the target position and target location can be determined, **characterized in that** on the trailer vehicle (3.1, 3.2, 3.3) there is a first electronic control unit (26) in which the measurement data of the surroundings sensor system (19, 20a, 20b) and the measurement data of the trailer vehicle sensor system (38) which is present on the trailer vehicle can be evaluated taking into account the dimensions and the chassis geometry of the trailer vehicle including the drawbar geometry, and a setpoint trajectory (32.1, 32.2, 32.3) which is referred to the rotational axis (25) of the articulation coupling (15.1, 15.2, 15.3) can be determined, which setpoint trajectory (32.1, 32.2, 32.3) is to be travelled along in order to reach the target position and target location (31.1, 31.2, 31.3) of the trailer vehicle, **in that** on the traction vehicle (2.1, 2.2, 2.3) there is a second electronic control unit (21) to which the data of the setpoint trajectory (32.1, 32.2, 32.3) can be transmitted from the first control unit (26), **in that** in the second electronic control unit (21) the measurement data of the traction vehicle sensor system (37) can be evaluated taking into account the dimensions and the chassis geometry of the traction vehicle, **in that** in the second electronic control unit (21) that route-related profile of the setpoint steering lock (αₛ) of the steerable wheels (5a, 5b) of the traction vehicle which is necessary to travel along the transmitted setpoint trajectory (32.1, 32.2, 32.3) during the manoeuvring process can be determined.

13. Device according to Claim 12, **characterized in that** the second electronic control unit (21) is connected to a display device (39) in the driver's cab (40) of the traction vehicle (2.1, 2.2, 2.3) and/or to the steering actuators (41) on the steerable wheels (5a, 5b) of the traction vehicle and/or to brake actuators (42a, 42b; 42c, 42d) on the travel brake of the traction vehicle (2.1, 2.2, 2.3) as well as the trailer vehicle (3.1, 3.2, 3.3) and/or to a shift actuator (41) on a shiftable transmission (41) and/or to a clutch actuator on a shiftable clutch.

14. Device according to Claim 13, **characterized in that** data which contain the dimensions and the chassis geometry of the trailer vehicle (3.1, 3.2, 3.3) including the drawbar geometry are stored in a non-volatile data memory (27) which is assigned to the trailer vehicle and which is connected to the control unit (26) of the trailer vehicle.

15. Device according to Claim 12 or 14, **characterized in that** data which contain the dimensions and the chassis geometry of the traction vehicle (2.1, 2.2, 2.3) are stored in a non-volatile data memory (22) which is assigned to the traction vehicle and which is connected to the control unit (21) of the traction vehicle.

16. Device according to one of Claims 12 to 15, **characterized in that** the control unit (26) of the trailer vehicle (3.1, 3.3) and the control unit (21) of the traction vehicle (2.1, 2.3) are connected to one another via a data bus (28) which has, for the purpose of coupling and uncoupling the trailer vehicle, a detachable plug connection (29) which is arranged near to the articulation coupling (15.1, 15.3).

17. Device according to one of Claims 12 to 16, **characterized in that** the control unit (26) of the trailer vehicle (3.2, 3.3) and the control unit (21) of the traction vehicle (2.2, 2.3) are each assigned a radio transmitter unit (33) and a radio receiver unit (34) via which the two control units (21, 26) can be connected to one another in a wireless fashion.

## Revendications

1. Procédé de commande du processus de stationnement d'un attelage de véhicule (1.1, 1.2, 1.3) comprenant un véhicule tracteur motorisé (2.1, 2.2, 2.3) et un véhicule remorque (3.1, 3.2, 3.3) couplés entre eux via un couplage articulé (15.1, 15.2, 15.3), l'attelage de véhicule comportant un système de détection de véhicule tracteur (37) et un système de détection de véhicule remorque (38) permettant de détecter sa position réelle et situation réelle (30.1, 30.2, 30.3) et dans lequel au moins le véhicule remorque est pourvu d'un système de détection de l'environnement (19, 20a, 20b) permettant de détecter l'environnement de l'attelage du côté arrière, sachant qu'en cas de processus de stationnement dans lequel l'attelage de véhicule (1.1, 1.2, 1.3) est stationné pour l'essentiel vers l'arrière dans une position cible et situation cible (31.1, 31.2, 31.3), les données de mesure détectées par le système de détection de l'environnement (19, 20) sont analysées, qu'au moins une position cible et situation cible de l'attelage de véhicule est calculée et qu'une courbe de trajectoire est déterminée à laquelle l'attelage de véhicule peut être stationné de la position réelle et situation réelle dans la position cible et situation cible, **caractérisé en ce que** dans un premier appareil de commande électronique (26) disposé au niveau du véhicule remorque (3.1, 3.2, 3.3), les données de mesure du système de détection de l'environnement (19, 20) et les données de mesure du système de détection de véhicule remorque (38) présent au niveau du véhicule remorque (3.1, 3.2, 3.3) sont analysées en tenant compte des dimensions, de la géométrie de châssis et de la géométrie de barre de traction du véhicule remorque et qu'une courbe de trajectoire théorique (32.1, 32.2, 32.3) relative à l'axe de rotation (25) du couplage articulé (15.1, 15.2, 15.3) est définie, ladite courbe devant être parcourue pour atteindre la position cible et situation cible (31.1, 31.2, 31.3) du véhicule remorque, que les données de la courbe de trajectoire théorique (32.1, 32.2, 32.3) sont ensuite transmises par le premier appareil de commande électronique (26) du véhicule remorque à un deuxième appareil de commande électronique (21) disposé au niveau du véhicule tracteur (2.1, 2.2, 2.3), que les données de mesure du système de détection de véhicule tracteur (37) sont analysées en tenant compte des dimensions et de la géométrie de châssis du véhicule tracteur et que ladite trajectoire relative au tronçon du débattement théorique (αₛ) des roues (5a, 5b) motrices du véhicule tracteur est définie, ledit débattement étant nécessaire pendant le processus de stationnement pour parcourir la courbe de trajectoire théorique (32.1, 32.2, 32.3) calculée et que l'attelage de véhicule (1.1, 1.2, 1.3) est commandé en marche arrière le long de la courbe de trajectoire théorique (32.1, 32.2, 32.3) prédéfinie.

2. Procédé selon la revendication 1, **caractérisé en ce que** le calcul de la courbe de trajectoire théorique (32.1, 32.2, 32.3) est répété en continu dans l'appareil de commande (26) du véhicule remorque (3.1, 3.2, 3.3) pendant le processus de stationnement et que les données ainsi actualisées de la courbe de trajectoire théorique sont respectivement transmises à l'appareil de commande (21) du véhicule tracteur (2.1, 2.2, 2.3) pour analyser la courbe de trajectoire théorique actualisée en vue de corriger si nécessaire la trajectoire du débattement théorique (αₛ) des roues motrices (5a, 5b) du véhicule tracteur.

3. Procédé selon la revendication 1 ou 2, **caractérisé en ce que** pendant le processus de stationnement, le débattement théorique (αₛ) respectif ou la différence (Δαₛ) entre le débattement théorique (αₛ) et le débattement réel (α) des roues motrices (5a, 5b) du véhicule tracteur (2.1, 2.2, 2.3) est affiché optiquement dans la cabine de conduite (40) du véhicule tracteur.

4. Procédé selon l'une quelconque des revendications 1 à 3, **caractérisé en ce qu'**en cas de véhicule tracteur (2.1, 2.2, 2.3) disposant d'une transmission de direction pouvant être actionnée par l'actionneur de direction (41) excitable, le débattement théorique (αₛ) respectif des roues motrices (5a, 5b) du véhicule tracteur est réglé de façon automatisée pendant le processus de stationnement.

5. Procédé selon l'une quelconque des revendications 1 à 4, **caractérisé en ce que** pendant le processus de stationnement, la direction de conduite à suivre pour parcourir la courbe de trajectoire théorique (32.1, 32.2, 32.3) est affichée optiquement dans la cabine de conduite (40) du véhicule tracteur (2.1, 2.2, 2.3).

6. Procédé selon l'une quelconque des revendications 1 à 5, **caractérisé en ce qu'**en cas de véhicule tracteur (2.1, 2.2, 2.3) disposant d'une boîte de vitesses (44) à vitesse changeable avec un actionneur de changement de vitesse (43) excitable, le rapport de stationnement respectif est passé de façon automatisée pendant le processus de stationnement.

7. Procédé selon l'une quelconque des revendications 1 à 6, **caractérisé en ce qu'**en cas de processus de stationnement, le moment où la position cible et situation cible (31.1, 31.2, 31.3) du véhicule remorque (3.1, 3.2, 3.3) est atteint dans la cabine de conduite (40) du véhicule tracteur (2.1, 2.2, 2.3) est affiché optiquement et/ou acoustiquement.

8. Procédé selon l'une quelconque des revendications 1 à 7, **caractérisé en ce qu'**en cas de véhicule tracteur (2.1, 2.2, 2.3) disposant d'un frein de service actionnable par un actionneur de frein (42a, 42b, 42c, 42d) excitable, le frein de service est actionné de façon automatisée pendant le processus de stationnement lorsque la position cible et situation cible (31.1, 31.2, 31.3) du véhicule remorque (3.1, 3.2, 3.3) est atteinte.

9. Procédé selon l'une quelconque des revendications 1 à 8, **caractérisé en ce que** les données de la courbe de trajectoire théorique (32.1, 32.2, 32.3) sont transmises par voie filaire et/ou sans fil à l'appareil de commande (21) du véhicule tracteur (2.1, 2.2, 2.3) par le biais de l'appareil de commande (26) du véhicule remorque (3.1, 3.2, 3.3).

10. Procédé selon l'une quelconque des revendications 1 à 9, **caractérisé en ce que** lorsque l'analyse du système de détection de l'environnement (19, 20a, 20b) contenu dans l'appareil de commande (26) du véhicule remorque (3.1, 3.2, 3.3) obtient plusieurs positions cibles et situations cibles possibles du véhicule remorque, la courbe de trajectoire théorique (32.1, 32.2, 32.3) est calculée pour la position cible et situation cible (31.1, 31.2, 31.3) nécessitant la plus petite variation de la situation actuelle du véhicule remorque et/ou la variation la plus réduite de l'angle de braquage (γ) actuel de la barre de traction (9).

11. Procédé selon l'une quelconque des revendications 1 à 9, **caractérisé en ce que** lorsque l'analyse du système de détection de l'environnement (19, 20a, 20b) contenu dans l'appareil de commande (26) du véhicule remorque (3.1, 3.2, 3.3) obtient plusieurs positions cibles et situations cibles possibles du véhicule remorque, ces positions cibles et situations cibles sont affichées optiquement via la liaison avec l'appareil de commande (21) du véhicule tracteur (2.1, 2.2, 2.3) sous la forme adaptée dans la cabine de conduite (40) du véhicule tracteur, le conducteur pouvant sélectionner via un dispositif de saisie la position cible et situation cible (31.1, 31.2, 31.3) souhaitée du véhicule remorque et la position cible et situation cible sélectionnée étant transmises à l'appareil de commande (26) du véhicule remorque (3.1, 3.2, 3.3), à la suite de quoi la courbe de trajectoire théorique (32.1, 32.2, 32.3) associée est définie.

12. Dispositif de commande du processus de stationnement d'un attelage de véhicule (1.1, 1.2, 1.3) comprenant un véhicule tracteur motorisé (2.1, 2.2, 2.3) et un véhicule remorque (3.1, 3.2, 3.3) couplés entre eux via un couplage articulé (15.1, 15.2, 15.3), l'attelage de véhicule comportant un système de détection de véhicule tracteur (37) et un système de détection de véhicule remorque (38) permettant de détecter sa position réelle et situation réelle (30.1, 30.2, 30.3) et dans lequel au moins le véhicule remorque est pourvu d'un système de détection de l'environnement (19, 20a, 20b) permettant de détecter l'environnement de l'attelage du côté arrière, sachant qu'en cas de processus de stationnement dans lequel l'attelage de véhicule (1.1, 1.2, 1.3) est stationné pour l'essentiel vers l'arrière dans une position cible et situation cible (31.1, 31.2, 31.3), les données de mesure détectées par le système de détection de l'environnement (19, 20a, 20b) sont analysées, qu'au moins une position cible et situation cible de l'attelage de véhicule est calculée et qu'une courbe de trajectoire peut être déterminée à laquelle l'attelage de véhicule peut être stationné de la position réelle et situation réelle dans la position cible et situation cible, **caractérisé en ce qu'**un premier appareil de commande électronique (26) disposé au niveau du véhicule remorque (3.1, 3.2, 3.3) est présent dans lequel les données de mesure du système de détection de l'environnement (19, 20a, 20b) et les données de mesure du système de détection de véhicule remorque (38) présent au niveau du véhicule remorque sont analysées en tenant compte des dimensions, de la géométrie de châssis du véhicule remorque incluant la géométrie de barre de traction et qu'une courbe de trajectoire théorique (32.1, 32.2, 32.3) relative à l'axe de rotation (25) du couplage articulé (15.1, 15.2, 15.3) est définie, ladite courbe devant être parcourue pour atteindre la position cible et situation cible (31.1, 31.2, 31.3) du véhicule remorque, qu'un deuxième appareil de commande électronique (21) disposé au niveau du véhicule tracteur (2.1, 2.2, 2.3) est présent au niveau duquel les données de la courbe de trajectoire théorique (32.1, 32.2, 32.3) sont transmises par le premier appareil de commande électronique (26), que les données de mesure du système de détection de véhicule tracteur (37) peuvent être analysées dans le deuxième appareil de commande électronique (21) en tenant compte des dimensions et de la géométrie de châssis du véhicule tracteur, que ladite trajectoire relative au tronçon du débattement théorique (αₛ) des roues (5a, 5b) motrices du véhicule tracteur peut être déterminée dans le deuxième appareil de commande électronique (21), ledit débattement étant nécessaire pendant le processus de stationnement pour parcourir la courbe de trajectoire théorique (32.1, 32.2, 32.3) transmise.

13. Dispositif selon la revendication 12, **caractérisé en ce que** le deuxième appareil de commande électronique (21) est relié à un dispositif d'affichage (39) prévu dans la cabine de conduite (40) du véhicule tracteur (2.1, 2.2, 2.3) et/ou à des actionneurs de direction (41) prévus au niveau des roues motrices (5a, 5b) du véhicule tracteur et/ou à des actionneurs de frein (42a, 42b ; 42c, 42d) prévus au niveau du frein de conduite du véhicule tracteur (2.1, 2.2, 2.3) ainsi que du véhicule remorque (3.1, 3.2, 3.3) et/ou à un actionneur de changement de vitesse (41) prévu au niveau d'une boîte de vitesses (41) à vitesse changeable et/ou à un actionneur d'embrayage prévu au niveau d'un embrayage de conduite à vitesse changeable.

14. Dispositif selon la revendication 13, **caractérisé en ce que** les données contenant les dimensions et la géométrie de châssis du véhicule remorque (3.1, 3.2, 3.3) incluant la géométrie de barre de traction sont mémorisées dans une mémoire de données (27) non volatile associée au véhicule remorque et reliée à l'appareil de commande (26) du véhicule remorque.

15. Dispositif selon la revendication 12 ou 14, **caractérisé en ce que** les données contenant les dimensions et la géométrie de châssis du véhicule tracteur (2.1, 2.2, 2.3) sont mémorisées dans une mémoire de données (22) non volatile associée au véhicule tracteur et reliée à l'appareil de commande (21) du véhicule tracteur.

16. Dispositif selon l'une quelconque des revendications 12 à 15, **caractérisé en ce que** l'appareil de commande (26) du véhicule remorque (3.1, 3.3) et l'appareil de commande (21) du véhicule tracteur (2.1, 2.3) sont reliés entre eux via un bus de données (28) servant au couplage et découplage du véhicule remorque, ledit bus comportant une liaison enfichable (29) amovible disposée à proximité du couplage articulé (15.1, 15.3).

17. Dispositif selon l'une quelconque des revendications 12 à 16, **caractérisé en ce que** respectivement une unité d'émission et de réception radio (33, 34) via laquelle les deux appareils de commande (21, 26) peuvent être reliés entre eux sans fil est associée à l'appareil de commande (26) du véhicule remorque (3.2, 3.3) et à l'appareil de commande (21) du véhicule tracteur (2.2, 2.3).
